# EUROPÄISCHE PATENTSCHRIFT

(11) **EP 3 509 788 B1**
(45) Veröffentlichungstag und Bekanntmachung des Hinweises auf die Patenterteilung: **26.10.2022**
(21) Anmeldenummer: 17752352.9
(22) Anmeldetag: 08.08.2017
(51) Int. Cl.: B23Q 9/00, B23P 6/00, B23Q 11/00, F01D 5/00, F01D 25/28

(54) **BEARBEITUNGSVORRICHTUNG ZUR BEARBEITUNG EINES IN EINEM UNTER BILDUNG EINER TEILFUGE ZWEIGETEILTEN TURBINENGEHÄUSE ANGEORDNETEN ROTORS**
MACHINING DEVICE FOR MACHINING A ROTOR ARRANGED IN A TURBINE HOUSING WHICH CONSISTS OF TWO PARTS, THEREBY FORMING A JOINT
DISPOSITIF D'USINAGE DESTINÉ À L'USINAGE D'UN ROTOR DISPOSÉ DANS UN CARTER DE TURBINE EN DEUX PARTIES POUR FORMER UN JOINT DE SÉPARATION

(30) Priorität: 06.09.2016 DE 102016216857
(43) Veröffentlichungstag der Anmeldung: 17.07.2019
(73) Patentinhaber: Siemens Energy Global GmbH & Co. KG, 81739 München (DE)
(72) Erfinder: GIESEL, Rick, 45127 Essen (DE)
(86) Internationale Anmeldenummer: PCT/EP2017/069994
(87) Internationale Veröffentlichungsnummer: WO 2018/046209

(56) Entgegenhaltungen:
- EP-A1- 1 987 915
- EP-A1- 3 006 160

## Beschreibung

Die Erfindung betrifft eine Bearbeitungsvorrichtung zur Bearbeitung eines in einem unter Bildung einer Teilfuge zweigeteilten Turbinengehäuse angeordneten Rotors.

Es hat sich gezeigt, dass es erforderlich werden kann, einen Rotor, der in einer Turbine, wie etwa einer Gasturbine, installiert ist und insbesondere bereits in Betrieb war bzw. Komponenten eines solchen nachträglich insbesondere mechanisch zu bearbeiten. Dies ist mit erheblichem Aufwand verbunden, da für die nachträgliche Bearbeitung des Rotors das Turbinengehäuse geöffnet und der Rotor ausgebaut werden muss. Im Anschluss an den Ausbau muss der Rotor - beispielsweise für eine mechanische Bearbeitung durch Drehen oder Fräsen - auf einer Werkbank positioniert werden, ggf. in dem Werk, in welchem die Herstellung des Rotors erfolgte, was zusätzlich mit einem aufwendigen Transport verbunden ist. Je nachdem, was zu bearbeiten ist, kann auch ein vollständiges Entstapeln des Rotors erforderlich sein. Dieser gesamte Prozess kostet viel Zeit sowie Arbeitskraft und ist dementsprechend teuer.

Die EP 1 987 915 A1 offenbart eine Haltevorrichtung um Komponenten in einer Turbine zu bearbeiten.

Ausgehend von diesem Stand der Technik ist es daher eine Aufgabe der vorliegenden Erfindung, eine Bearbeitungsvorrichtung anzugeben, mittels derer eine Bearbeitung eines Rotors nach dessen Installation in einer Turbine unter gegenüber dem Stand der Technik reduziertem Aufwand möglich ist.

Diese Aufgabe wird gelöst durch eine Bearbeitungsvorrichtung zur Bearbeitung eines in einem unter Bildung einer Teilfuge zweigeteilten Turbinengehäuse angeordneten Rotors in situ bei abgenommener oberer Gehäusehälfte, umfassend
- einen Grundkörper, der Befestigungsmittel zur lösbaren Befestigung des Grundkörpers an der unteren Gehäusehälfte im Bereich der Teilfuge aufweist,
- zumindest einen Werkzeughalter zur Aufnahme wenigstens eines Bearbeitungswerkzeugs, der relativ zu dem Grundkörper, bevorzugt entlang zumindest zweier Achsen ausrichtbar direkt oder indirekt an dem Grundkörper befestigt ist,
- mehrere teleskopartig ausgebildete, bevorzugt stufenlos in verschiedene Längseinstellungen arretierbare Stabilisierungselemente, deren eines freie Ende jeweils gelenkig an dem Grundkörper befestigt ist und die an ihren anderen freien Enden mit weiteren Befestigungsmitteln versehen sind, die derart ausgebildet sind, dass die freien Enden lösbar und gelenkig an der unteren Gehäusehälfte des Turbinengehäuses befestigbar sind.

Der Grundgedanke der Erfindung besteht darin, eine geeignete Bearbeitungsvorrichtung mit wenigstens einem Bearbeitungswerkzeug bereitzustellen, welche bei entfernter oberer Gehäusehälfte der Turbine und insbesondere ausgebauten Lauf- und/oder Leitschaufeln bzw. gesamtem Leitschaufelapparat, für die Dauer der erforderlichen Nachbearbeitung an der unteren Gehäusehälfte montiert wird, um den Rotor in situ zu bearbeiten. Ein Ausbau des Rotors ist infolge dessen nicht mehr erforderlich, wodurch der mit der Bearbeitung verbunden Aufwand und somit die Kosten erheblich reduziert werden können.

Die erfindungsgemäße Bearbeitungsvorrichtung umfasst einen beispielsweise aus Metall gefertigten Grundkörper, der über geeignete Befestigungsmittel an der unteren Gehäusehälfte vorübergehend, nämlich für die Dauer der erforderlichen Bearbeitung, fixiert, beispielsweise festgeschraubt werden kann, und mittels dem das wenigstens eine Bearbeitungswerkzeug in der Nähe des Rotors bzw. unmittelbar neben dem Rotor positioniert werden kann, so dass es für die Bearbeitung mit dem Rotor in Eingriff bringbar ist. Das wenigstens eine Werkzeug ist an einem Werkzeughalter angeordnet, welcher an dem Grundkörper bewegbar gehalten ist. So kann das Werkzeug für einen Bearbeitungsvorgang komfortabel an eine oder mehrere gewünschte Bearbeitungsposition(en) gefahren und exakt positioniert werden. Beispielsweise sind Linearführungen vorgesehen, mittels derer ein bevorzugt motorisiertes Verfahren des Werkzeughalters und somit des wenigstens einen Werkzeugs möglich ist. Der Werkzeughalter kann beispielsweise auch an einem Werkzeugträger, der insbesondere in Form eines entlang wenigstens zweier Achsen verfahrbaren Schlittens gegeben sein kann, angeordnet sein.

Als Grundkörper kann beispielsweise eine Trägerplatte dienen, von der bevorzugt ein Endbereich an der unteren Gehäusehälfte im Bereich der Teilfuge befestigt, insbesondere an der Gehäusehälfte festgeschraubt wird, und deren dem befestigten Endbereich gegenüberliegender Endbereich in die Gehäusehälfte in Richtung des Rotors ragt und das Werkzeug trägt.

Der Grundkörper kann sich in bevorzugter Ausführungsform durch eine Z-Form mit zwei zumindest im Wesentlichen parallel zueinander orientierten plattenförmigen Abschnitten auszeichnen, die zueinander versetzt angeordnet und über einen ebenfalls plattenförmigen Verbindungsabschnitt, der bevorzugt zumindest im Wesentlichen orthogonal zu den beiden plattenförmigen Abschnitten orientiert ist, miteinander verbunden sind. Dann sind bevorzugt ober- und/oder unterseitig Verstärkungsstege vorgesehen, um die Steifigkeit und Stabilität des Grundkörpers zu erhöhen. Über einen im Querschnitt Z-förmigen Grundkörper, wie etwa eine im Querschnitt Z-förmige Trägerplatte, kann die Höhe von Werkzeughalter und/oder ggf. vorhandenem Werkzeugträger und/oder ggf. vorhandenen Linearführungen und ggf. vorhandener weiterer Komponenten ausgeglichen werden, so dass das wenigstens eine Bearbeitungswerkzeug zumindest in etwa mittig mit dem Rotor in Eingriff gebracht werden kann.

Die Abmessungen des Grundkörpers sind bevorzugt an den Turbinentyp bzw. an die Turbinentypen, an welchem bzw. welchen die erfindungsgemäße Vorrichtung zum Einsatz kommen soll, angepasst. Die Länge liegt beispielsweise im Bereich von 140 cm bis 150 cm und die Breite im Bereich von 40 cm bis 50 cm, so dass bei gängigen Turbinentypen einerseits für durch die Länge insbesondere der Abstand zwischen der Wandung der unteren Gehäusehälfte der Turbine und dem Rotor durch den Grundkörper überbrückt werden kann und andererseits die Breite gewährleistet, dass auf dem Grundkörper genügend Verfahrweg für das wenigstens eine Bearbeitungswerkezeug bereitsteht, um beispielsweise den Abstand zweier benachbarter Radscheiben zu überbrücken, so dass Bearbeitungsstellen an zwei Radscheiben erreicht werden können, ohne dass die erfindungsgemäße Vorrichtung von der unteren Gehäusehälfte gelöst und an einer anderen axialen Position an dieser wieder fixiert werden muss.

Das wenigstens eine Bearbeitungswerkzeug kann zum Beispiel auf der Oberseite eines beispielsweise durch eine Trägerplatte gegebenen Grundkörpers angeordnet sein, wodurch eine besonders gute Zugänglichkeit des Bearbeitungswerkzeuges gewährleistet wird.

Bei den an dem Grundkörper vorgesehenen Befestigungsmitteln kann es sich um Durchgangsbohrungen handeln, durch welche zur Befestigung des Grundkörpers Schrauben und/oder Gewindestangen geführt und in an dem Turbinengehäuse vorhandene Gewindebohrungen eingeschraubt bzw. durch an dem Turbinengehäuse vorhandene Durchgangsbohrungen geführt und mittels Muttern befestigt werden. In bevorzugter Ausführungsform sind die Befestigungsmittel derart ausgestaltet, dass eine Befestigung an den Gehäusen von Turbinen unterschiedlichen Bautyps komfortabel möglich ist. Beispielsweise können an dem Grundkörper mehrere Durchgangsbohrungen an unterschiedlichen Positionen vorgesehen sein, um eine große Montageflexibilität - auch für unterschiedliche Turbinentypen - zu gewährleisten und um unterschiedliche Abstände zwischen Gehäusewandung und Rotor überbrücken zu können.

Es kann ein Werkzeugträger vorgesehen sein, der relativ zu dem Grundkörper, bevorzugt entlang zumindest zweier Achsen - beispielsweise über Linearführungen - ausrichtbar direkt oder indirekt an dem Grundkörper befestigt ist, und an welchem dann der Werkzeughalter und somit das wenigstens eine Werkzeug angeordnet ist.

Bei dem an dem Werkzeughalter angeordneten wenigstens einen Bearbeitungswerkzeug kann es sich beispielsweise um ein Drehwerkzeug, wie etwa einen Stechdrehmeißel handeln. Eine Bearbeitung mit der erfindungsgemäßen Vorrichtung durch Drehen ist besonders vorteilhaft, da die Relativbewegung zwischen Werkzeug und Werkstück, also dem zu bearbeitenden Rotor bzw. einer Komponente dieses, dann insbesondere durch die ohnehin vorhandene Drehvorrichtung des Rotors bewirkt werden kann, so dass keine zusätzliche Arbeitsspindel erforderlich ist. Alternativ oder zusätzlich dazu, dass die vorhandene Drehvorrichtung des Rotors genutzt wird, kann auch eine separaten Drehvorrichtung bereitgestellt und verwendet werden, beispielsweise, wenn Drehzahlen gewünscht bzw. erforderlich sind, die mit der vorhandenen Drehvorrichtung nicht oder nicht ohne weiteres realisiert werden können.

Für eine besonders hohe Steifigkeit der Vorrichtung im montierten Zustand und somit eine besonders stabile Positionierung des Grundkörpers und daran gehaltenen Bearbeitungswerkzeuges, die in eine hohe Bearbeitungsgenauigkeit resultiert, umfasst die erfindungsgemäße Vorrichtung weiterhin mehrere bevorzugt stabförmige, insbesondere aus Metall gefertigte Stabilisierungselemente. Diese sind an ihrem einen Ende mit dem Grundkörper gelenkig verbunden und die jeweils anderen Enden sind - analog zu dem Grundkörper - an der unteren Gehäusehälfte der Turbine fixierbar bzw. im montierten Zustand fixiert, wozu geeignete weitere Befestigungsmittel für eine ebenfalls gelenkige Verbindung vorgesehen sind. Die Stabilisierungselemente, von denen beispielsweise zwei oder drei oder auch mehr vorgesehen sein können, sind teleskopartig, also in ihrer Länge veränderbar. Sie können ferner bevorzugt stufenlos in verschiedene Längseinstellungen arretiert werden, wodurch es möglich ist, nach deren Befestigung an einer Turbinengehäusehälfte eine infolge einer gewählten Länge und Arretierung den Grundkörper stabilisierenden Einstellung zu halten, insbesondere Druckspannungen für die Stabilisierung aufzubringen. Mittels der Stabilisierungselemente kann auch eine Einstellung des wenigstens einen Bearbeitungswerkzeuges auf Drehmitte erzielt werden, wobei hierdurch unter anderem die gegebenenfalls auftretende Durchbiegung des Grundkörpers aufgrund des Eigengewichtes der Vorrichtung ausgeglichen werden kann.

Die Stabilisierungselemente können beispielsweise jeweils zwei Streben und eine Spanneinrichtung, über welche die beiden Streben miteinander verbunden sind, umfassen. Die Spanneinrichtung ist dann bevorzugt derart ausgebildet, dass die Länge der Stabilisierungselemente stufenlos verändert und arretiert werden kann. Beispielswiese ist die Anordnung derart, dass durch die Betätigung der Spanneinrichtung die beiden Streben aufeinander zu- bzw. voneinander wegbewegt werden können.

Die erfindungsgemäße Bearbeitungsvorrichtung lässt sich für die Bearbeitung eines Rotors auf einfache, komfortable Weise an einem Turbinengehäuse montieren, indem der Grundkörper und die Stabilisierungselemente an dem Gehäuse montiert, beispielsweise festgeschraubt und/oder festgespannt werden. Die erfindungsgemäß gelenkigen Verbindungen ermöglichen dabei eine besonders hohe Montageflexibilität und die Vorrichtung kann ideal ausgerichtet werden. Infolge der insbesondere durch die Stabilisierungselemente bedingten hohen Steifigkeit der Vorrichtung im montierten Zustand wird eine besonders hohe Bearbeitungsgenauigkeit erzielt.

Eine Ausführungsform der erfindungsgemäßen Vorrichtung zeichnet sich dadurch aus, dass die Stabilisierungselemente an einem Endbereich des Grundkörpers gelenkig befestigt sind und die Befestigungsmittel zur lösbaren Befestigung des Grundkörpers an der unteren Gehäusehälfte im Bereich der Teilfuge an einem diesem Endbereich gegenüberliegenden Endbereich des Grundkörpers vorgesehen sind. Dann kann ein Endbereich des Grundkörpers unmittelbar an dem Gehäuse befestigt, beispielsweise festgeschraubt werden, und der diesem gegenüberliegende Endbereich, welcher im montierten Zustand in das Gehäuseinnere ragt und dem Rotor zugewandt ist, kann über die Stabilisierungselemente, mit dem Gehäuse verbunden und dadurch stabilisiert werden. Das wenigstens eine Bearbeitungswerkzeug ist dann in vorteilhafter Ausgestaltung auch in demjenigen Endbereich des Grundkörpers angeordnet, an welchem die Stabilisierungselemente mit diesem verbunden sind. Beispielsweise ist das wenigstens eine Bearbeitungswerkzeug auf der Oberseite desjenigen Endbereiches angeordnet, welcher dem mit den Befestigungsmittel versehenen Endbereich gegenüberliegt und im montierten Zustand der Vorrichtung dem Rotor zugewandt ist, und die Stabilisierungselemente sind an der Unterseite und/oder den Seiten des Grundkörpers in diesem Endbereich befestigt.

Eine weitere Ausführungsform zeichnet sich dadurch aus, dass drei Stabilisierungselemente vorgesehen sind und insbesondere eine freies Ende eines Stabilisierungselementes an der Unterseite des Grundkörpers gelenkig befestigt ist und von den beiden weiteren Stabilisierungselementen jeweils ein freies Ende in Bezug auf die Unterseite seitlich an dem Grundkörper gelenkig befestigt ist, wobei die freien Enden der beiden weiteren Stabilisierungselemente insbesondere an einander gegenüberliegenden Seiten des Grundkörpers befestigt sind. Ist die Anordnung derart getroffen, können die Stabilisierungselemente insbesondere derart mittels der weiteren Befestigungsmittel an der unteren Gehäusehälfte der Turbine fixiert werden, dass von den Stabilisierungselementen im montierten Zustand der Vorrichtung zumindest in etwa ein Tetraeder, also eine besonders stabile geometrische Form aufgespannt wird. Die beiden seitlich an dem Grundkörper befestigten Stabilisierungselemente werden dann bevorzugt - analog zu dem Grundkörper - im Bereich der Teilfuge an dem Gehäuse lösbar befestigt, wofür auf in dem Bereich der Teilfuge ohnehin in dem Gehäuse vorhandene Gewindebohrungen und/oder Durchgangsbohrungen zurückgegriffen werden kann und dasjenige Stabilisierungselement, welches an der Unterseite des Grundkörpers befestigt ist, wird insbesondere an der Gehäuseinnenseite, bevorzugt an dort vorgesehenen Aufnahmen für Leitschaufelträger, lösbar befestigt verspannt werden.

Auch kann vorgesehen sein, dass die weiteren Befestigungsmittel desjenigen Stabilisierungselementes, dessen freies Ende an der Unterseite des Grundkörpers gelenkig befestigt ist, ausgebildet sind, um eine lösbare Befestigung an der unteren Gehäusehälfte durch Verspannen zu ermöglichen, und/oder die weiteren Befestigungsmittel derjenigen Stabilisierungselemente, deren freie Enden jeweils seitlich an dem Grundkörper gelenkig befestigt sind, ausgebildet sind, um eine lösbare Befestigung an der unteren Gehäusehälfte im Bereich der Teilfuge durch Verschrauben zu ermöglichen.

Ferner kann die Vorrichtung eine Laser-Messeinrichtung umfassen, die insbesondere relativ zu dem Grundkörper, bevorzugt entlang zumindest zweier Achsen ausrichtbar direkt oder indirekt an dem Grundkörper befestigt und/oder ausgebildet ist, um einen zu bearbeitenden Bereich, bevorzugt eine Nut, an dem Rotor zu erfassen und insbesondere zu vermessen. Mittels der Laser-Messeinrichtung kann eine Live-Messung noch während der Bearbeitung erfolgen. Die Laser-Messeinrichtung ist bevorzugt derart ausgestaltet, dass sie basierend auf dem Messprinzip der Laser-Linien-Triangulation arbeitet. Ist ein Werkzeugträger vorgesehen, der - beispielsweise mittels Linearführungen - verfahrbar an dem Grundkörper angeordnet ist, und das wenigstens eine Bearbeitungswerkzeug trägt, kann die Laser-Messeinrichtung auch an dem Werkzeugträger befestigt sein, so dass sie zusammen mit dem Bearbeitungswerkzeug an eine jeweils zu bearbeitende Stelle gefahren wird.

Zum Auffangen der infolge einer Bearbeitung des Rotors entstehenden Materialspäne kann die Vorrichtung ferner eine Auffang- und/oder Abtransport-, insbesondere Absaugeinrichtung umfassen, welche bevorzugt wenigsten einen Auffangbehälter für Materialspäne und/oder einen Staubsauger, besonders bevorzugt einen Industriestaubsauger umfasst. Der Auffangbehälter umfasst bevorzugt eine beispielsweise an seiner Oberseite vorgesehene Einlassöffnung für Materialspäne, wobei die Anordnung dann insbesondere derart ist, dass die Einlassöffnung unterhalb des wenigstens einen Bearbeitungswerkzeuges liegt, so dass die entstehenden Materialspäne in die Einlassöffnung fallen. Bevorzugt zeigt die Schneide des wenigstens einen Bearbeitungswerkzeuges, insbesondere des Meißels eines zum Einsatz kommenden Stechdrehmeißels, nach unten, sodass die entstehenden Materialspäne durch den Spanwinkel der Schneide direkt in die Einlassöffnung geleitet werden. Ist ein verfahrbarer Werkzeugträger vorgesehen, kann der Auffangbehälter auch an diesem befestigt sein. Eine an diesem bevorzugt vorgesehene Einlassöffnung wird dann - zusammen mit dem Werkzeug - immer automatisch an den Ort der Entstehung der Materialspäne gefahren.

Ebenfalls beschrieben ist ein Verfahren zur Bearbeitung eines in einem unter Bildung einer Teilfuge zweigeteilten Turbinengehäuse angeordneten Rotors, das nicht zur Erfindung gehört, bei dem
- die obere Gehäusehälfte von der unteren Gehäusehälfte abgenommen wird,
- gegebenenfalls Laufschaufeln und/oder Leitschaufeln entfernt werden,
- eine Bearbeitungsvorrichtung, die wenigstens ein Bearbeitungswerkzeug aufweist, an der unteren Gehäusehälfte lösbar befestigt wird,
- mittels des wenigstens einen Bearbeitungswerkzeuges von dem Rotor Material entfernt wird, insbesondere, indem das wenigstens eine Bearbeitungswerkzeug mit einem zu bearbeitenden Bereich des Rotors in Eingriff gebracht und der Rotor rotiert wird, während das Bearbeitungswerkzeug mit diesem in dem zu bearbeitenden Bereich in Eingriff steht,
- die Bearbeitungsvorrichtung nach Abschluss des Bearbeitungsvorganges, der an einer oder an mehreren Bearbeitungsstellen an dem Rotor erfolgen kann, wieder von der unteren Gehäusehälfte gelöst wird,
- gegebenenfalls Laufschaufeln und/oder Leitschaufeln wieder eingesetzt werden, und
- die obere Gehäusehälfte wieder mit der unteren Gehäusehälfte verbunden wird.

In bevorzugter Ausgestaltung des Verfahrens wird eine Bearbeitungsvorrichtung gemäß der vorliegenden Erfindung an der unteren Gehäusehälfte des Turbinengehäuses lösbar befestigt, wobei insbesondere der Grundkörper an der unteren Gehäusehälfte im Bereich der Teilfuge über die entsprechenden Befestigungsmittel lösbar befestigt wird, und die Stabilisierungselemente, deren eines freie Ende an dem Grundkörper gelenkig befestigt ist, werden mit ihrem jeweils anderen freien Ende im Bereich der Teilfuge und/oder an der Gehäuseinnenseite, bevorzugt an dort vorgesehenen Aufnahmen für Leitschaufelträger, lösbar befestigt insbesondere verschraubt und/oder verspannt.

Weiterhin kann vorgesehen sein, dass die Stabilisierungselemente und insbesondere der Grundkörper derart lösbar an der unteren Gehäusehälfte befestigt werden, dass von den Stabilisierungselementen, insbesondere zusammen mit dem Grundkörper, im montierten Zustand zumindest in etwa ein Tetraeder aufgespannt wird, wobei bevorzugt eine Bearbeitungsvorrichtung verwendet wird, welche drei Stabilisierungselemente umfasst. Ein Tetraeder ist eine besonders stabile geometrische Form, so dass eine besonders hohe Stabilität der Vorrichtung im am Turbinengehäuse montierten Zustand erzielt werden kann.

Für den Erhalt der Tetraeder-Form bei einer Vorrichtung mit drei Stabilisierungselementen erfolgt die Befestigung an der unteren Gehäusehälfte bevorzugt derart, dass zwei der Stabilisierungselemente im montierten Zustand zumindest in etwa horizontal ausgerichtet sind und eines der Stabilisierungselemente im montierten Zustand zumindest in etwa vertikal ausgerichtet ist, wobei unter zumindest in etwa horizontal bzw. vertikal zu verstehen ist, dass ein Winkel zwischen 0° und 25° mit der Horizontalen bzw. Vertikalen eingeschlossen wird. Bevorzugt erfolgt die Befestigung derart, dass ein Winkel zwischen 5° und 25° mit der Horizontalen bzw. der Vertikalen eingeschlossen wird. Dabei wird bevorzugt ein Stabilisierungselement zumindest in etwa vertikal orientiert, welches an der Unterseite des Grundkörpers befestigt ist und bevorzugt Stabilisierungselemente zumindest in etwa horizontal orientiert, welche seitlich, insbesondere an gegenüberliegenden Seiten des Grundkörpers befestigt sind.

Mittels des wenigstens einen Bearbeitungswerkzeuges wird in besonders bevorzugter Ausgestaltung eine an dem Rotor vorhandene Nut bearbeitet, bevorzugt tiefer gestochen, insbesondere um wenigsten 0,8 mm, bevorzugt um wenigstens 1,0 mm, besonders bevorzugt um etwa 1,5 mm.

Bei der wenigstens einen Nut handelt es sich bevorzugt um eine der Befestigung von Dichtblechen dienende Ringnut, die sich insbesondere entlang des Außenumfangs einer Radscheibe oder einer Mini-Scheibe des Rotors erstreckt.

Schließlich wird ein Verfahren zur Reparatur und/oder Nachrüstung einer Turbine, das nicht zur Erfindung gehört, beschrieben, bei dem in eine an dem Rotor der Turbine vorgesehene und der Befestigung von Dichtblechen dienende Ringnut, die sich bevorzugt entlang des Außenumfangs einer Radscheibe oder einer Zwischenscheibe des Rotors erstreckt, bei aus der Ringnut entfernten Dichtblechen ein insbesondere aus Metall gefertigtes längliches Dichtband in der Ringnut angeordnet wird, dessen Breite bevorzugt an die Breite der Ringnut angepasst ist und dessen Dicke bevorzugt im Bereich von 0,5 mm bis 5 mm, besonders bevorzugt im Bereich von 1 mm bis 2 mm liegt, und dessen Länge bevorzugt dem Umfang der Ringnut im Bereich des Nutgrundes entspricht oder diesen überschreitet.

Das Verfahren zur Reparatur und/oder Nachrüstung einer Turbine wird insbesondere im Anschluss an das erfindungsgemäße Verfahren zur Bearbeitung eines in einem unter Bildung einer Teilfuge zweigeteilten Turbinengehäuse angeordneten Rotors durchgeführt, besonders bevorzugt, nachdem unter Durchführung dieses eine der Befestigung von Dichtblechen dienende Ringnut tiefer gestochen wurde. In Weiterbildung des Verfahrens zur Reparatur und/oder Nachrüstung einer Turbine ist vorgesehen, dass das Dichtband derart in der Ringnut angeordnet wird, dass es zumindest im Wesentlichen orthogonal zu den beiden Stirnseiten der Ringnut orientiert ist.

Es hat sich gezeigt, dass eine sehr zuverlässige Möglichkeit zur Vermeidung von Kühlluftleckagen an einer Turbine im Bereich der Dichtbleche, die zur Befestigung in am Rotor vorgesehene Ringnuten eingesteckt sind darin besteht, in den Ringnuten jeweils ein bevorzugt aus Metall gefertigtes Dichtband unterhalb der Dichtbleche anzuordnen, welches sich insbesondere umlaufend in der Ringnut erstreckt, in besonders zweckmäßiger Ausgestaltung um deren gesamten Umfang, und das bevorzugt quer zu den Dichtblechen orientiert ist. Die Breite eines solchen Dichtbandes entspricht zweckmäßiger Weise der Breite der abzudichtenden Ringnut und/oder die Länge des Dichtbandes dem Umfang der Ringnut im Bereich des Ringnutgrundes bzw. in radialer Richtung kurz, beispielsweise einige Millimeter oberhalb des Nutgrundes.

Das in die Nut eingefädelte, "lose" im Nutgrund liegende Dichtband wird dann im Betrieb der Gasturbine aufgrund der bei Rotation des Rotors auftretenden Zentrifugalkraft radial nach außen und somit gegen die unteren Stirnseiten der Dichtbleche gedrückt und dichtet, da es an den Stirnseiten der Ringnut formschlüssig anliegt von unten her senkrecht zu den Dichtblechen ab, so dass Kühlluftleckagen und damit einhergehende Wirkungsgrad- sowie Leistungsreduzierungen der Turbine zuverlässig vermieden bzw. zumindest erheblich reduziert werden. Infolge der Vermeidung von Kühlluftleckagen ist ferner eine bessere Kühlung der Schaufelfüße möglich, wodurch eine höhere Lebensdauer dieser erzielt werden kann.

Weitere Merkmale und Vorteile der vorliegenden Erfindung werden anhand der nachfolgenden Beschreibung einer Ausführungsform einer erfindungsgemäßen Bearbeitungsvorrichtung unter Bezugnahme auf die beiliegende Zeichnung deutlich. Darin ist
- Figur 1: eine perspektivische Teilansicht einer Radscheibenanordnung des Rotors einer Gasturbine mit Laufschaufeln und einem Dichtblech;
- Figur 2: ein vergrößerter Ausschnitt aus Figur 1, welcher einen Abschnitt des Dichtbleches im Bereich der Kühlluftleckage zeigt;
- Figur 3: einen Teilschnitt durch die Ringnut einer Radscheibe, in welcher ein Dichtblech gehalten und ein umlaufendes Dichtband angeordnet ist in schematischer Darstellung;
- Fig. 4: eine perspektivische Ansicht einer Ausführungsform der erfindungsgemäßen Bearbeitungsvorrichtung im montierten Zustand von schräg oben;
- Figur 5: eine perspektivische Seitenansicht der Vorrichtung aus Figur 4;
- Figur 6: eine perspektivische Aufsicht auf die Vorrichtung aus Figur 4;
- Figur 7: eine perspektivische Teilansicht der Vorrichtung aus Figur 4 von schräg oben;
- Figur 8: eine perspektivische Ansicht des Werkzeugträgers der Vorrichtung aus Figur 4 mit daran befestigtem Werkzeughalter von schräg oben;
- Figur 9: eine perspektivische Ansicht des Werkzeugträgers aus Figur 8 von schräg unten;
- Figur 10: eine perspektivische Teilansicht der Vorrichtung aus Figur 4, welche den Grundkörper und zwei der Stabilisierungselemente abschnittsweise in vergrößerter Darstellung zeigt;
- Figur 11: eine perspektivische Teilansicht der Vorrichtung aus Figur 4, welche die Befestigungsmittel an einem freien Ende eines Stabilisierungselementes in vergrößerter Darstellung zeigt;
- Figur 12: eine perspektivische Teilansicht der Vorrichtung aus Figur 4, welche die Werkzeugaufnahme mit daran befestigtem Werkzeughalter von schräg oben in vergrößerter Darstellung zeigt;
- Figur 13: eine vergrößerte perspektivische Ansicht einer Spanneinrichtung eines Stabilisierungselementes der Vorrichtung aus Figur 4;
- Figur 14: eine perspektivische Teilansicht der Vorrichtung aus Figur 4, welche den Werkzeugträger mit der daran befestigten Auffang- und Absaugvorrichtung für infolge der Bearbeitung auftretenden Materialspäne in vergrößerter Darstellung von schräg oben zeigt;
- Figur 15: eine perspektivische Teilansicht der Vorrichtung aus Figur 4, welche eine Teil des Auffangbehälters der Auffang- und Absaugvorrichtung von schräg unten in vergrößerter Darstellung zeigt;
- Figur 16: eine perspektivische Teilansicht der Vorrichtung aus Figur 4, welche eine Wechsel von einem Fixierkörper auf einen anderen Fixierkörper verdeutlicht;
- Figur 17: eine Teilschnittdarstellung durch den Rotor, welche drei von vier Stufen zeigt.

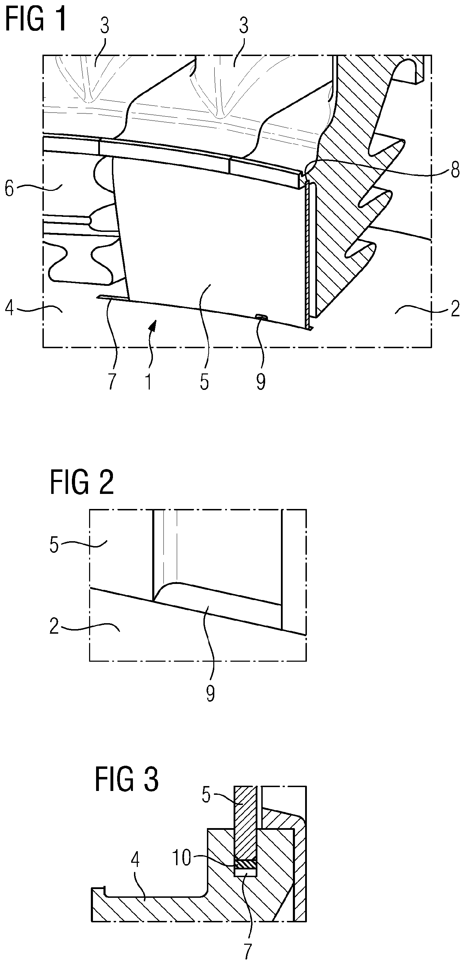

Die Figur 1 zeigt eine perspektivische Teilansicht einer Radscheibenanordnung 1 des Rotors einer nicht weiter dargestellten Gasturbine. Die Radscheibenanordnung 1 umfasst eine Radscheibe 2, mehrere entlang des Außenumfangs der Radscheibe 2 befestigte Laufschaufeln 3, eine auch als Mini-Disc 4 bezeichnete Zwischenscheibe sowie mehrere Dichtbleche 5, von denen in dem in Figur 1 dargestellten Zustand nur eines eingesetzt ist. Die Laufschaufeln 3 weisen tannenbaumförmige Schaufelfüße 6 auf, die zur Befestigung in korrespondierend ausgebildete Aufnahmenuten in der Radscheibe 2 eingeschoben sind. Die Mini-Disc 4 weist einen geringeren Durchmesser als die Radscheibe 2 auf und ist in der Figur 1 vor der Radscheibe 2 angeordnet. Der Rotor umfasst in an sich bekannter Weise eine Mehrzahl von Radscheibenanordnungen 1, die in axialer Richtung hintereinander angeordnet sind, wobei sich jeweils eine Mini-Disc 4 und eine Radscheibe 2 abwechseln.

Die Dichtbleche 5 sind in zwei radial voneinander beabstandeten Ringnuten 7, 8 gehalten, konkret einer unteren Ringnut 7, die in der Mini-Disc 4 vorgesehen ist und einer oberen Ringnut 8, die durch eine Vielzahl von benachbart angeordneten Ringnutsegmenten definiert ist, die jeweils in den einzelnen Laufschaufeln 3 vorgesehen sind.

Auf der in der Figur 1 nicht erkennbaren Rückseite der Radscheibe 2 sind in analoger Weise Dichtbleche 5 der Radscheibenanordnung 1 vorgesehen, die ebenfalls in zwei Ringnuten 7, 8 gehalten sind. Dabei wird die obere Ringnut 8 wiederum durch eine Vielzahl von benachbart angeordneten Ringnutsegmenten definiert, die jeweils in den einzelnen Laufschaufeln 3 vorgesehen sind. Die untere Ringnut 7 hingegen ist rückseitig nicht in einer Mini-Disc 4 sondern in der Radscheibe 2 vorgesehen. Aufgrund von Spalten 9 zwischen den Dichtblechen 5 und den Radscheiben 2 bzw. Mini-Discs 4 des Rotors, die insbesondere im Bereich der in der Radscheibe 2 oder der Mini-Disc 2b vorgesehenen Ringnut 7, in welcher die Dichtbleche 5 Radscheiben- bzw. Mini-Disc-seitig gehalten sind, auftreten, kommt es im Betrieb der Gasturbine zu Kühlluftleckagen. Der vergrößerten Teildarstellung aus Figur 2 kann ein solcher Spalt 9 beispielhaft entnommen werden.

Derartige Kühlluftleckagen treten insbesondere im Überlappungsbereich benachbarter Dichtbleche 5 auf, wo es vermehrt zur Spaltbildung kommt. Vorliegend sind die aufgrund der Überlappungen bestehenden Spalte etwa 0,08 mm breit. Die Leckagen bewirken eine Reduzierung des Wirkungsgrades und der erzeugten Leistung der Gasturbine.

Dieser Problematik wird erfindungsgemäß damit begegnet, dass - bei ausgebauten Laufschaufeln 3 - in die Ringnuten 7 in der Radscheibe 2 bzw. Mini-Disc 4 ein aus Metall gefertigtes Dichtband 10 geeigneter Abmessungen umlaufend eingefädelt wird. Das Dichtband 10 im in die Ringnut 7 eingesetzten Zustand kann der schematischen Schnittdarstellung aus Figur 3 entnommen werden.

Die Abmessungen des Dichtbandes 10 sind dabei derart zu wählen, dass es im Betrieb über den gesamten Umfang der Ringnut 7 senkrecht zu den Dichtblechen 5 von unten her abdichtet, also in axialer Richtung und in Umfangsrichtung zumindest nahezu formschlüssig in der Ringnut 7 liegt. Demgemäß sollte die Breite des Dichtbandes 10 der Breite der abzudichtenden Ringnut 7 entsprechen, so dass das Dichtband 10, wenn es orthogonal zu den Stirnseiten der Ringnut 7 in diese eingelegt ist, formschlüssig an den Stirnseiten anliegt, und die Länge des Dichtbandes 10 dem Umfang der Ringnut 7 im Bereich des Ringnutgrundes bzw. in radialer Richtung kurz, beispielsweise 1 mm, oberhalb dieses, entsprechen.

Im Betrieb der Gasturbine, wenn die Laufschaufeln 3 und Dichtbleche 5 montiert sind, wird das eingesetzte Dichtband 10, welches sich in der Ringnut 7 unterhalb der Dichtbleche 5 über den gesamten Umfang der Ringnut 7 erstreckt, aufgrund der bei Rotation des Rotors auftretenden Zentrifugalkräfte gegen die unteren Stirnseiten der Dichtbleche 5 gedrückt und dichtet aufgrund seines formschlüssigen Sitzes von unten her ab, so dass Kühlluftleckagen vermieden oder zumindest erheblich reduziert werden.

Bevor das Dichtband 10 in die Ringnut 7 in der Radscheibe 2 bzw. Mini-Disc 4 eingefädelt werden kann, wird die Ringnut 7 zweckmäßiger Weise gegenüber ihrem ursprünglichen Fertigungszustand tiefer gestochen, damit ausreichend Raum für das Dichtband 10 besteht.

Für eine mechanische Nachbearbeitung des Rotors muss jedoch nach dem Stand der Technik der Rotor vollständig aus der Gasturbine ausgebaut und entstapelt werden, wodurch ein erheblicher Zeit- und Arbeitsaufwand und somit erhebliche Kosten verursacht würden.

Unter Durchführung des Verfahrens zur Bearbeitung eines Rotors und Verwendung einer erfindungsgemäßen Bearbeitungsvorrichtung kann dies vermieden werden, da mittels dieser eine Nachbearbeitung des Rotors im montierten, gestapelten Zustand in situ möglich ist.

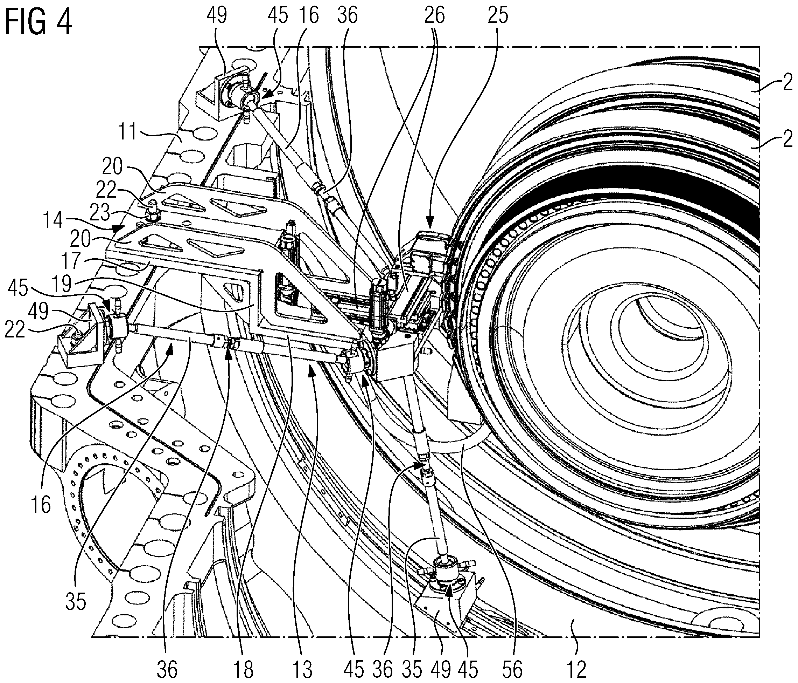

Ausgehend von einem vollständig montierten Zustand der Gasturbine, die den Rotor umfasst, welcher mit den Ringnuten 7, 8 zur Aufnahme der Dichtbleche 5 versehen und in einem unter Bildung einer Teilfuge 11 zweigeteilten Turbinengehäuse angeordnet ist, wird zur Durchführung des erfindungsgemäßen Verfahrens zur Bearbeitung eines Rotors zunächst die obere von der unteren Gehäusehälfte 12 abgenommen und es werden die Laufschaufeln 3 und die Leitschaufeln entfernt, insbesondere der gesamte Leitapparat ausgekugelt. Eine Gasturbine in dem hieraus resultierenden, teilweise demontierten Zustand kann den Figuren 4 bis 6 in unterschiedlichen Ansichten entnommen werden. Von dem Rotor sind in diesen nur die Radscheiben 2 und Mini-Discs 4 dargestellt. Die Radscheiben 2 und Mini-Discs 4 sind in an sich bekannter Weise an einer in den Figuren nicht erkennbaren Welle des Rotors befestigt und können über diese in Rotation versetzt werden. In einen solchen teilweise demontierten Zustand wird die Gasturbine beispielsweise im Rahmen einer HGPI (Hot Gas Path Inspection) gebracht.

Nach dem Entfernen von oberer Gehäusehälfte und Schaufeln wird im nächsten Schritt eine erfindungsgemäße Bearbeitungsvorrichtung 13 an der unteren Gehäusehälfte 12 lösbar befestigt. Eine Ausführungsform einer erfindungsgemäße Bearbeitungsvorrichtung 13 kann den Figuren 4 bis 6 in unterschiedlichen Ansichten entnommen werden und zwar in dem an der unteren Gehäusehälfte 12 montierten Zustand.

Die Bearbeitungsvorrichtung 13 weist einen Grundkörper 14, einen an der Oberseite des Grundkörpers 14 relativ zu diesem bewegbar gehaltenen Werkzeughalter 15 sowie drei teleskopartig ausgebildete stabförmige Stabilisierungselemente 16 auf.

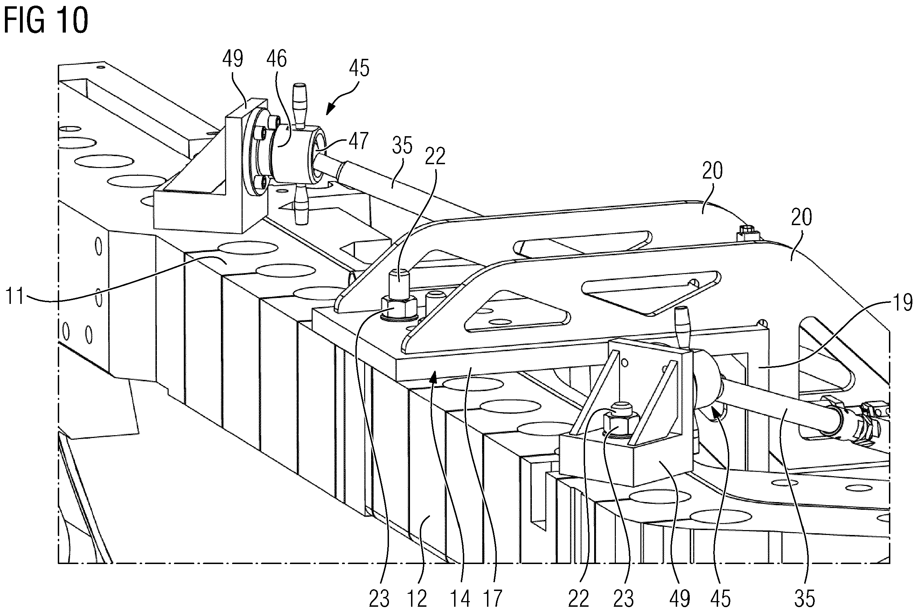

Der Grundkörper 14 ist vorliegend durch eine Trägerplatte gegeben, die im Querschnitt in etwa Z-förmig gestaltet ist und einen oberen und einen unteren plattenförmigen Abschnitt 17, 18 aufweist, die zumindest im Wesentlichen parallel zueinander orientiert sind, sich in der Figur 3 horizontal erstrecken und in vertikaler Richtung versetzt zueinander angeordnet sind. Die beiden horizontalen plattenförmigen Abschnitte 17, 18 sind über eine sich vertikal erstreckenden Verbindungsabschnitt 19 miteinander verbunden, wodurch sich die Z-Form ergibt. Zur Erzielung einer besonders hohen Stabilität des Grundkörpers 14 im montierten Zustand sind ferner sowohl ober- als auch unterseitig an den plattenförmigen Abschnitten 17, 18 Verstärkungsstege 20 vorgesehen (vgl. auch Figur 10). Die Länge des Grundkörpers 14 beträgt bei dem dargestellten Ausführungsbeispiel 140 cm und die Breite 40 cm.

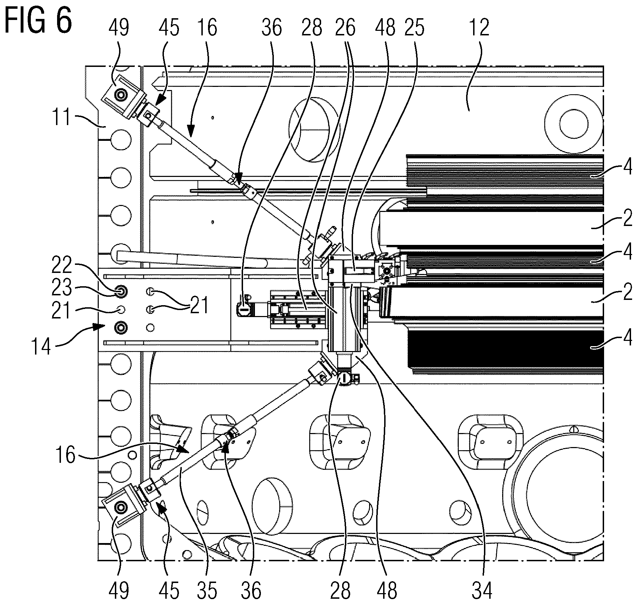

Der Z-förmige Grundkörper 14 ist in dem dargestellten montierten Zustand lösbar an der unteren Gehäusehälfte 12 im Bereich der Teilfuge 11 des Gehäuses befestigt. Hierzu weist er an seinem im montierten Zustand von dem Rotor abgewandten und der unteren Gehäusehälfte 12 zugewandten Endbereich Befestigungsmittel 21 auf, die bei dem dargestellten Ausführungsbeispiel durch insgesamt sechs Durchgangsbohrungen 21 gegeben sind, die der Draufsicht aus Figur 6 gut entnommen werden können. Die sechs Durchgangsbohrungen 21 sind in zwei Reihen mit jeweils drei nebeneinanderliegenden Bohrungen 21 aufgeteilt, wobei eine Reihe mit drei Durchgangsbohrungen weiter innen liegt, also näher an dem dem Rotor zugewandten Endbereich des Grundkörpers 14, an welchem der Werkzeughalter 15 an diesem angeordnet ist. Diese Reihe von Durchgangsbohrungen 21 wird bei dem dargestellten Ausführungsbeispiel nicht genutzt sondern dient der Befestigung des Grundkörpers 14 an der unteren Gehäusehälfte 12 einer anderen Turbine, bei welcher der Abstand zwischen der Gehäusewandung und dem Rotor geringer ist als bei dem dargestellten Ausführungsbeispiel und zwar zumindest in etwa um den Abstand der beiden Reihen von Durchgangsbohrungen 21. Die erfindungsgemäße Vorrichtung 13 kann somit besonders flexibel an Turbinen verschiedener Ausgestaltung zum Einsatz kommen.

Für die lösbare Befestigung des Grundkörpers 14 erstreckt sich durch zwei der sechs Durchgangsbohrungen 21 jeweils eine Gewindestange 22. Die Gewindestange 22 erstreckt sich weiterhin durch eine in den Figuren nicht erkennbare Durchgangsbohrung 21 in der unteren Gehäusehälfte 12. Auf beiden Enden ist jeweils eine Unterlegscheibe aufgesteckt und eine Mutter 23 aufgeschraubt, um den Grundköper 14 gegen die untere Gehäusehälfte 12 zu verspannen (vgl. auch die vergrößerte Darstellung aus Figur 10). Bei den Durchgangsbohrungen 21 in der Gehäusehälfte 12 handelt es sich um solche, die ohnehin in der unteren Gehäusehälfte 12 im Bereich der Teilfuge 11 vorhanden sind, um die Verbindung zwischen der unteren 12 und der oberen Gehäusehälfte herzustellen.

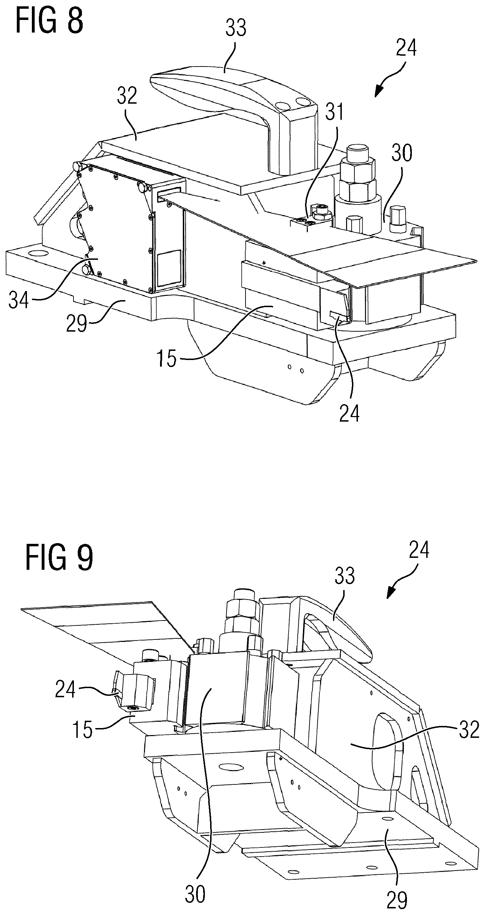

An dem Grundkörper 14 der erfindungsgemäßen Vorrichtung ist der Werkzeughalter 15, der vorliegend - wie in den Figuren 8 und 9 erkennbar - einen Stechdrehmeißel 24 als Bearbeitungswerkzeug trägt, verfahrbar gehalten. Konkret ist der Werkzeughalter 15 an einem Werkzeugträger 25, welcher relativ zu dem Grundkörper 14 ausrichtbar ist, lösbar befestigt, wobei der Werkzeugträger 25 auf der Oberseite des Grundkörpers 14 angeordnet ist. Vergrößerte Darstellungen des Werkzeugträgers 25 mit daran gehaltenem Werkzeughalter 15 können den Figuren 8 und 9 entnommen werden. Der Stechdrehmeißel 24 ist mit dem Werkzeughalter 15 verschraubt, so dass er von dem Werkzeughalter 15 abgenommen werden kann.

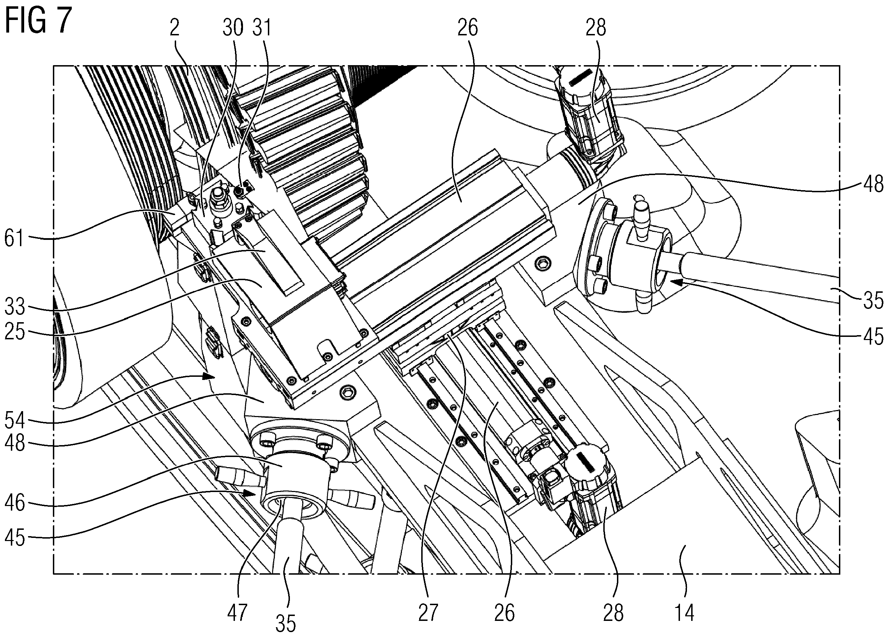

Der Werkzeugträger 25 ist mittels zweier horizontal sowie orthogonal zueinander ausgerichteter Linearführungen 26 entlang zweier orthogonal zueinander stehender Achsen linear verfahrbar und mittels eines die beiden Linearführungen 26 miteinander verbindenden Klemmringes 27 drehbar an dem Grundkörper 14 befestigt. Hiermit kann bei Bedarf ein Winkel zwischen den Achsen eingestellt werden. Der Klemmring 27 ist in der vergrößerten Darstellung gemäß Figur 7 zu erkennen. Der Werkzeugträger 25 ist, wie der Figur 7 entnommen werden kann, mit dem Führungswagen der oberen Linearführung 26 verschraubt und die obere Linearführung 26 mit dem Führungswagen der unteren Linearführung 26.

Wie aus den Figuren 4 bis 6 hervorgeht, sind die Linearführungen 26 konkret derart orientiert, dass im montierten Zustand der Bearbeitungsvorrichtung 13 in Bezug auf den Rotor sowohl eine Bewegung des Werkzeugträgers 25 in radialer als auch in axialer Richtung möglich ist. Jeder der beiden Linearführungen 26 ist ein Motor 28 zugeordnet, über welchen der Werkzeugträger 25 motorisiert entlang der jeweiligen Achse vor- und zurück verfahren werden kann. Die Motoren 28 sind mit einer in den Figuren nicht dargestellten Steuereinrichtung verbunden, über welche eine CNC-basierte Steuerung der Position des Werkzeugträgers 25 und somit Werkzeughalters 15 möglich ist. Die Steuereinrichtung ist derart ausgebildet, dass eine kompensierende Steuerung möglich ist und das Umkehrspiel bei einem Wechsel der Fahrtrichtung berücksichtigt wird, um eine besonders exakte Positionierung zu ermöglichen.

Eine vergrößerte Darstellung des Werkzeugträgers 25 mit Werkzeughalter 15 kann den Figuren 8 und 9 entnommen werden. Konkret umfasst der Werkzeugträger 25 eine Grundplatte 29, auf deren Oberseite in der in den Figuren 4, 6 und 8 nach rechts weisenden Seite, die im montierten Zustand dem Rotor zuzuwenden ist, eine Werkzeugaufnahme 30 angeordnet und mit der Grundplatte 29 verschraubt ist. An der Werkzeugaufnahme 30 ist wiederum der Werkzeughalter 15 mit dem Stechdrehmeißel 24 derart gehalten, dass die Schneide des Stechdrehmeißels 23 nach unten zeigt. Der Werkzeughalter 15 und die Werkzeugaufnahme 30 sind dabei derart korrespondieren zueinander ausgebildet, dass der Werkzeughalter 15 an zwei vorgegebenen Positionen, die sich an gegenüberliegenden Seiten der Werkzeugaufnahme 30 befinden, formschlüssig von oben auf die Werkzeugaufnahme 30 aufgesteckt werden kann. Durch die zwei Steckpositionen und einen entsprechend langen Verfahrweg der Linearführung 26 in Bezug auf den Rotor axialer Richtung wird es möglich, insgesamt vier Ringnuten 7 an zwei Radscheiben 2 bzw. Mini-Discs 4zu bearbeiten, ohne dass eine Umpositionierung der gesamten Bearbeitungsvorrichtung 13 an der unteren Gehäusehälfte 12 erforderlich ist.

Um zu verhindern, dass der Werkzeughalter 15 eine der beiden vorgegebenen Positionen an der Werkzeugaufnahme 30 im Betrieb nach oben hin verlassen kann, sind in den Figuren nicht erkennbare Exzenterelemente vorgesehen. Um die Höhe des Werkzeughalters 15 verändern zu können, ist ferner eine Höhenverstelleinrichtung 31 vorgesehen.

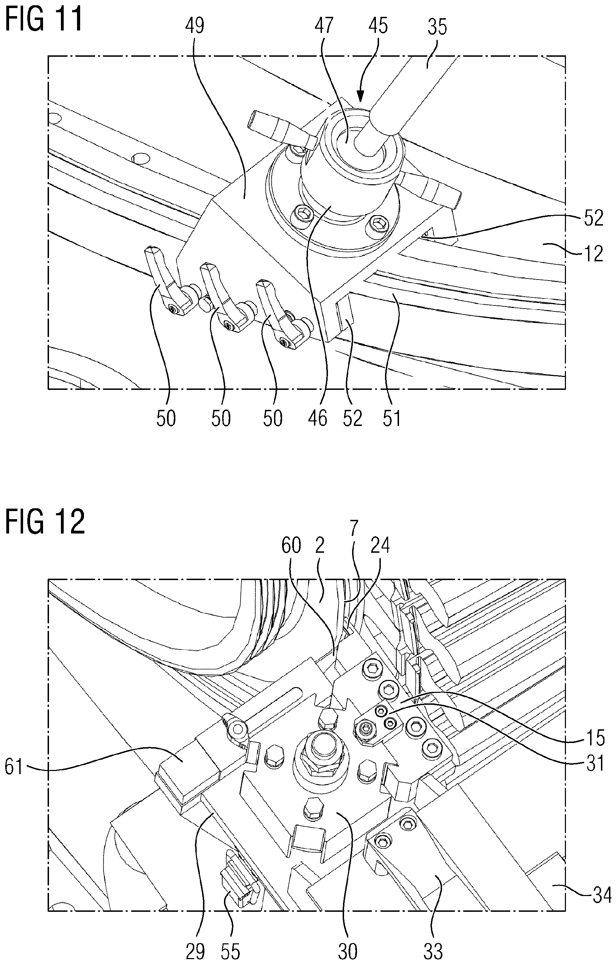

Die Werkzeugaufnahme 30 und der Werkzeughalter 15 können auch gut der vergrößerten Aufsicht aus Figur 12 entnommen werden. Der Werkzeugträger 25 weist ferner ein ebenfalls auf der Grundplatte 29 angeordnetes Gehäuseelement 32 auf, auf dessen Oberseite ein Griff 33 zum bequemen Einsetzen, Entfernen und Versetzen des Werkträgers 25 vorgesehen ist.

Seitlich an dem Gehäuseelement 32 ist eine Laser-Messeinrichtung 34 angeordnet, welche ausgebildet ist, um einen zu bearbeitenden Bereich, bei dem es sich im dargestellten Ausführungsbeispiel um die umlaufende Ringnut 7 in den Radscheiben 2 bzw. Mini-Discs 4 des Rotors der Gasturbine handelt, zu erfassen sowie zu vermessen. Die Laser-Messeinrichtung 34 ist ausgebildet, um auf dem Prinzip der Laser-Linien-Triangulation basierend zu arbeiten und um zweidimensionale Messungen durchzuführen. Das für einen Abtastvorgang emittierte Lasersignal ist in den Figuren 8 und 9 rein schematisch angedeutet. Die Laser-Messeinrichtung 34 kann einen Anschluss aufweisen, über welchen sie mit der CNC-basierten Steuereinrichtung verbunden werden kann, um im Rahmen eines Abtast- bzw. Messvorganges erfasste Werte an diese zu übermitteln, welche dann zur Steuerung der Linearführungen 26 zur Ausrichtung des Stechdrehmeißels 24 relativ zu dem zu bearbeitenden Bereich an der Radscheibe 2 herangezogen werden.

Um eine besonders hohe Stabilität und somit besonders hohe Bearbeitungsgenauigkeit zu erreichen, ist der Grundkörper 14 über die Befestigung mit den Gewindestangen 22 im Bereich der Teilfuge 11 hinausgehend mittels der drei Stabilisierungselemente 16 an der unteren Gehäusehälfte 12 lösbar befestigt.

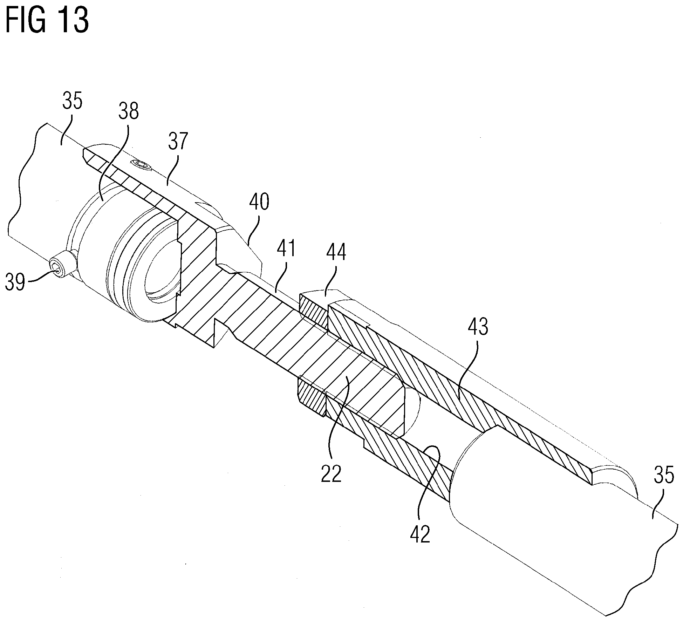

Die aus Metall gefertigten Stabilisierungselemente 16 sind stabförmig sowie teleskopartig, also in ihrer Länge veränderbar, ausgebildet und können stufenlos in verschiedenen Längseinstellungen arretiert werden. Bei dem dargestellten Ausführungsbeispiel sind die Stabilisierungselemente 16 konkret als Spannstreben ausgebildet, die jeweils zwei Streben 35 und eine Spanneinrichtung 36 umfassen. Die beiden Streben 35 sind dabei über die Spanneinrichtung 36 miteinander verbunden, die auf etwa auf mittiger Höhe der Stabilisierungselemente 16 angeordnet ist. Die beiden Streben 35 und die Spanneinrichtung 36 können der vergrößerten Darstellung aus Figur 13 entnommen werden.

Über die Spanneinrichtungen 36 kann die Länge der Stabilisierungselemente 16 stufenlos verändert und arretiert werden. Jede Spanneinrichtung 36 umfasst dazu eine über das Ende einer der beiden Streben 35, nämlich die in der Figur 13 nach links weisende, gesteckte erste Hülse 37, die derart an der linken Strebe 35 befestigt ist, dass sie gegenüber dieser rotiert jedoch ihre axiale Position an dieser nicht verändert werden kann. Hierzu ist an dem Ende der linken Strebe 35 eine umlaufende Nut 38 vorgesehen und es erstrecken sich durch die Wandung der Hülse 37 Gewindebohrungen, in die Schrauben 39 derart eingeschraubt sind, dass sie bis in die Nut 38 ragen, jedoch nicht in Kontakt mit der Strebe 35 stehen. Außenseitig an der Hülse 37 sind abgeflachte Anlageflächen 40 zur Anlage eines Schraubenschlüssels für die bequeme Rotation der Hülse 37 durch einen Benutzer vorgesehen.

Von dem freien, in der Figur 13 nach rechts weisenden Ende der Hülse 37 ragt eine mit einem Außengewinde 41 versehene Gewindestange 22 ab, die sich in axialer Richtung des Stabilisierungselementes 16 erstreckt. Bei dem Außengewinde 41 handelt es sich um ein Feingewinde. Die Gewindestange 22 ist bei dem dargestellten Ausführungsbeispiel einteilig mit der Hülse 37 ausgebildet kann aber auch eine separate Komponente darstellen, die dann starr mit der Hülse 37 verbunden ist, um gemeinsam mit dieser rotiert werden zu können.

Auf die Gewindestange 22 aufgeschraubt ist eine mit einem Innengewinde 42 versehene zweite Hülse 43 der Spanneinrichtung 36, die an dem Ende der anderen Strebe 35 starr befestigt, konkret auf deren Ende aufgesteckt und mit dieser verschweißt ist. Bei dem Innengewinde 42 der zweiten Hülse 43 handelt es sich analog zu dem Außengewinde 41 um ein Feingewinde.

Infolge der vorstehend beschriebenen Anordnung ist es möglich, dass die erste Hülse 37 gegenüber der zweiten 43 rotiert werden und hierdurch die relative axiale Position der beiden Hülsen 37, 43 und somit der beiden Streben 35 zueinander verändert werden kann. Da die Länge veränderbar ist, kann bei fixierten Enden der Stabilisierungselemente 16 durch Längenvergrößerung eine Druckspannung in die Stabilisierungselemente 16 eingebracht werden, wodurch eine besonders hohe Stabilität erreicht wird.

Damit eine einmal eingestellte Länge sich nicht ungewünscht wieder verkleinert und die Druckspannung verringert wird, ist eine Kontermutter 44 vorgesehen, welche nach der Einstellung einer gewünschten Länge durch rotieren der ersten Hülse 37 durch einen Benutzer gegen die zweite Hülse 43 geschraubt wird.

In der perspektivischen Figur 13 sind die beiden Hülsen 37 und 43 sowie die Kontermutter 44 zur Verdeutlichung aufgeschnitten dargestellt.

Von jedem der drei jeweils eine Spanneinrichtung 36 umfassenden Stabilisierungselemente 16 ist ein freies Ende gelenkig an dem Grundkörper 14 und das andere freie Ende gelenkig und lösbar an der unteren Gehäusehälfte 12 befestigt. Konkret ist jeweils ein freies Ende an demjenigen Endbereich des Grundkörpers 14, welcher in dem montierten Zustand gemäß den Figuren 4 bis 6 dem Rotor zugewandt ist, über jeweils ein Kugelgelenk 45 befestigt, welches über Schrauben mit Feingewinden arretierbar ist.

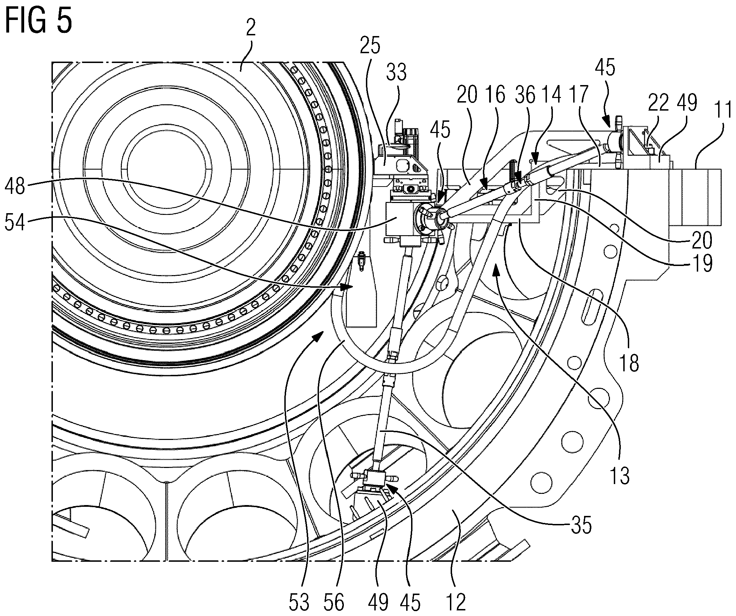

Jedes Kugelgelenk 45 umfasst eine am rotorseitigen Endbereich des Grundkörpers 14 festgeschraubte Gelenkkugelaufnahme 46 sowie eine an dem jeweiligen freien Ende des Stabilisierungselementes 16 vorgesehene Gelenkkugel 47, die in der Gelenckugelaufnahme 46 sitzt, in dieser rotierbar ist und über Schrauben arretiert werden kann. Von den drei Gelenkkugelaufnahmen 46 ist, wie insbesondere in der Seitenansicht aus Figur 5 erkennbar, eine an der Unterseite des Grundkörpers 14 angeschraubt und zwei weitere sind, wie insbesondere aus der Aufsicht aus Figur 6 hervorgeht, in Bezug auf die Unterseite seitlich an gegenüberliegenden Seiten des Grundkörpers 14 angeschraubt und zwar an zu diesem Zwecke vorgesehenen seitlichen Vorsprüngen 48, die schräge Anschlagflächen aufweisen, auf welche die Gelenkkugelaufnahmen 46 aufgeschraubt sind.

An dem jeweils anderen, nicht an dem Grundkörper 14 befestigten, freien Ende weist jedes der Stabilisierungselemente 16 ferner ein weiteres, baugleich ausgebildetes arretierbares Kugelgelenk 45 zur gelenkigen Befestigung an der unteren Gehäusehälfte 12 auf. An diesen drei Kugelgelenken 45 ist jeweils ein Fixierkörper 49 mit mehreren Schrauben befestigt, über den die lösbare Verbindung des jeweiligen freien Endes mit der unteren Gehäusehälfte 12 des Turbinengehäuses erfolgt.

Der Fixierkörper 49 derjenigen beiden Stabilisierungselemente 16, deren eines freie Ende seitlich an dem Grundkörper 14 befestigt ist, ist dabei derart ausgebildet, dass eine lösbare Befestigung des jeweils anderen freien Endes an der unteren Gehäusehälfte 12 im Bereich der Teilfuge 11 durch Verschrauben erfolgen kann. Hierzu weisen diese beiden Fixierkörper 49 jeweils eine Durchgangsbohrung auf, durch welche sich - analog zu der lösbaren Befestigung des Grundkörpers 14 an der unteren Gehäusehälfte 12 im Bereich der Teilfuge 11 - eine Gewindestange 22 erstreckt. In völlig analoger Weise zu der Befestigung des Grundkörpers 13 erstreckt sich das jeweils andere Ende der Gewindestange 22 durch eine in der unteren Gehäusehälfte 12 vorgesehene Durchgangsbohrung. Auf die Gewindestange 22 ist wiederum an beiden Seiten jeweils eine Mutter 23 aufgeschraubt und zur Befestigung der Stabilisierungselemente 16 an der unteren Gehäusehälfte 12 gegen den Fixierkörper 49 verspannt.

Der Fixierkörper 49 des verbleibenden, dritten Stabilisierungselementes 16, dessen eines freie Ende an der Unterseite des Grundkörpers 14 befestigt ist, ist ferner derart ausgebildet, dass eine Befestigung des anderen freien Endes an der unteren Gehäusehälfte 12 durch Verspannen möglich ist. Hierzu ist der Fixierkörper 49 in etwa U-förmig ausgebildet und weist, wie in der vergrößerten Darstellung von Figur 11 gut erkennbar, drei Spannhebel 50 auf, mittels derer drei sich durch die Wandung des Fixierkörpers 49 erstreckende, in der Figur nicht erkennbare Spannschrauben herein- und herausgedreht werden können, um den Fixierkörper 49 durch Verspannen an der unteren Gehäusehälfte 12, konkret an einer in dieser vorgesehenen Aufnahme 51 für die Leitschaufelträger der Turbine, zu befestigen.

Der Fixierkörper 49 für die Befestigung durch Verspannen weist in demjenigen Bereich, in dem er im befestigten Zustand mit der unteren Gehäusehälfte 12 in Kontakt steht, Reibbeläge 52 auf. Die Reibbeläge 52 sind in der Figur 11 zu erkennen. An den beiden anderen, an der Teilfuge 11 angeschraubten Fixierkörpern 49 können an der mit der Teilfuge 11 in Kontakt stehenden Unterseite der Fixierkörper 49 ebenfalls Reibbeläge 52 vorgesehen sein, um einen besonders sicheren Halt zu gewährleisten.

Durch die drei Stabilisierelemente 16 wird eine besonders hohe Steifigkeit der Vorrichtung 13 und somit eine besonders hohe Bearbeitungsgenauigkeit erreicht.

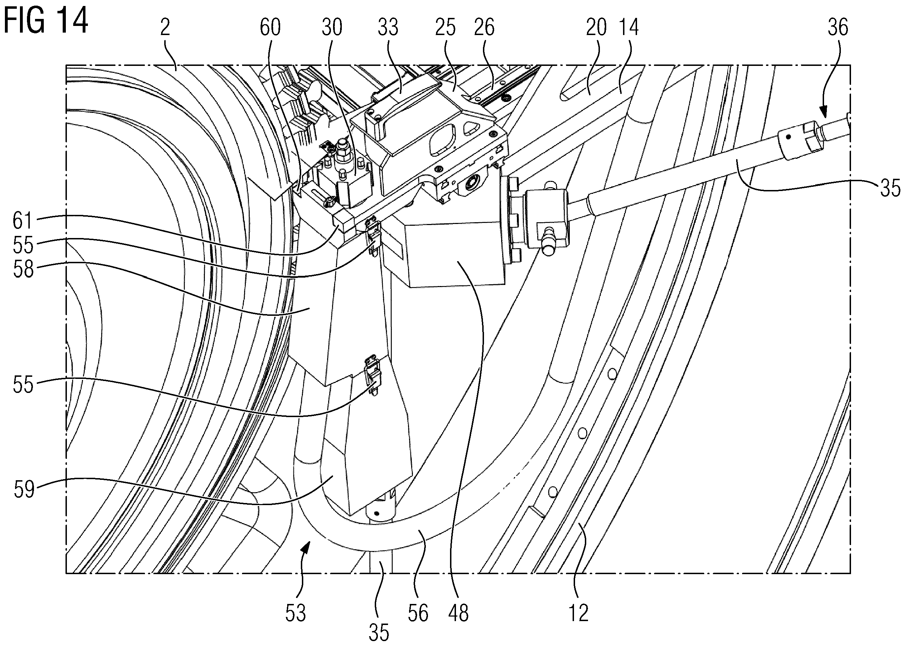

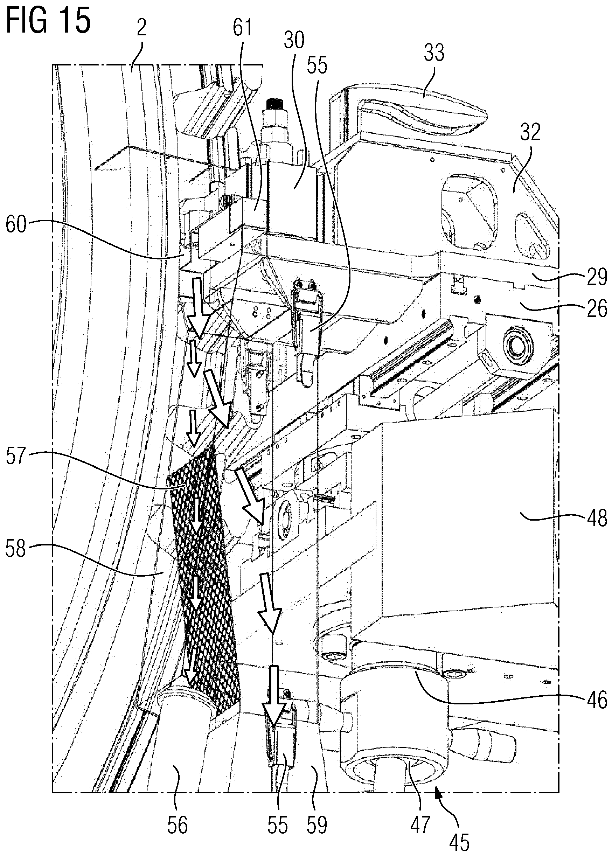

Zum Auffangen der während eines Bearbeitungsvorganges des Rotors erzeugten Materialspäne weist die Bearbeitungsvorrichtung 13 ferner eine Auffang- und Absaugeinrichtung 53 auf, die an dem Werkzeugträger 25 fixiert ist. Die Auffang- und Absaugeinrichtung 53 umfasst einen insbesondere in den Figuren 14 und 15 erkennbaren Auffangbehälter 54, welcher mittels Spannverschlüssen 55 an der Unterseite des Werkzeugträgers 25 lösbar befestigt ist, sowie einen in den Figuren nicht erkennbaren Industriestaubsauger, welcher mit dem Auffangbehälter 54 über einen Saugschlauchschlauch 56 fluidtechnisch verbunden ist. Der Auffangbehälter 54 und der Saugschlauchschlauch 56 der Auffang- und Absaugeinrichtung 53 sind in den vergrößerten Darstellungen in den Figuren 14 und 15 gut erkennbar.

Der Innenraum des Auffangbehälters 54 ist über ein Gitter 57, welches in der Figur 15, in welcher die Wandung des Auffangbehälters 54 transparent dargestellt ist, erkennbar ist, in einen Bereich für gröbere und einen Bereich für feinere Materialspäne unterteilt. Der Saugschlauchschlauch 56 mündet in den Bereich für die feineren Späne, welcher sich unterhalb des Gitters 57 erstreckt. Über das Gitter 57 wird verhindert, dass gröbere Materialspäne zu dem Saugschlauchschlauch 56 gelangen so dass weder dieser noch der Staubsauger verstopfen. Der Auffangbehälter 54 ist weiterhin zweiteilig ausgebildet, wobei die beiden Teile 58 und 59 ebenfalls über Spannverschlüsse 55 lösbar miteinander verbunden sind. Der in den Figuren untere Teil 59 definiert einen Auffangbereich für die gröberen Späne, die aufgrund des Gitters 57 nicht zu dem Saugschlauch 56 gelangen können, und welcher aufgrund der zweiteiligen Ausgestaltung besonders bequem abgenommen und geleert werden kann.

In der Figur 15 ist mittels größerer Pfeile der Weg, den gröbere Materialspäne durch den Auffangbehälter 54 zurücklegen angedeutet und mittels kleinerer Pfeile der Weg der feineren Späne.

An seiner Oberseite weist der Auffangbehälter 54 eine Einlassöffnung 60 auf, über welche die an der Bearbeitungsstelle entstehenden Materialspäne in den Auffangbehälter 54 gelangen. Der Auffangbehälter 54 ist dabei derart an dem Werkzeugträger 25 angeordnet, dass sich die Einlassöffnung 60 unterhalb des Werkzeugs 24 und somit im Betrieb der Vorrichtung unter der Bearbeitungsstelle erstreckt.

Die Einlassöffnung 60 ist mittels eines in den Figuren 14 und 15 besonders gut erkennbaren Schiebers 61 verschließbar. Dabei ist die Anordnung derart getroffen, insbesondere der Schieber 61 derart dimensioniert ist, dass wenn die Einlassöffnung 60 durch Betätigung des Schiebers 61 verschlossen wird, auf der gegenüberliegenden Seite eine weitere Einlassöffnung 60 gleicher Größe entsteht, die wiederum unterhalb des Stechdrehmeißels 24 liegt, wenn der Werkzeughalter 25 an der anderen vorgegebenen Position in die Werkzeugaufnahme 30 eingesteckt ist. Mittels des Schiebers 60 kann somit die Auffangvorrichtung 53 bequem an die jeweilige Werkzeugposition angepasst werden.

Um die vorstehend beschriebene Bearbeitungsvorrichtung 13 in den in den Figuren dargestellten montierten Zustand zu bringen, wird zunächst der Grundkörper 14 im Bereich der Teilfuge 11 an der unteren Gehäusehälfte 12 mit Hilfe der Gewindestangen 22 von einem Benutzer lösbar befestigt. Um eine gute Erreichbarkeit des Turbinengehäuses und eine bequeme Montage der erfindungsgemäßen Vorrichtung 13 zu ermöglichen, wurde hierzu eine in den Figuren nicht erkennbare Arbeitsplattform im unteren Bereich der unteren Gehäusehälfte 12 bereitgestellt, welche von dem Benutzer betreten werden kann.

Nach der Befestigung des Grundkörpers 14 werden die drei Fixierkörper 49 an den freien Enden der Stabilisierungselemente 16 im Bereich der Teilfuge 11 an der unteren Gehäusehälfte 12 festgeschraubt bzw. an der Aufnahme 51 für die Leitschaufelträger verspannt. Die Kugelgelenke 45 an beiden Enden der Stabilisierungselemente 16 gewährleisten dabei eine besonders hohe Montageflexibilität. Anschließend werden die Kugelgelenke 45 durch Festschrauben arretiert und die Länge der Stabilisierungselemente 16 wird nacheinander durch Rotieren der ersten Hülse 37 der Spanneinrichtung 36 vergrößert, um gleichmäßig Druckspannungen aufzubringen und eine höchstmögliche Steifigkeit der gesamten Konstruktion zu erreichen. Hierdurch kann insbesondere derjenige Endbereich des Grundkörpers 14, welcher dem Rotor zugewandt ist und an welchem der Stechdrehmeißel 24 angeordnet ist, besonders zuverlässig in Position gehalten und eine hohe Bearbeitungsgenauigkeit erzielt werden.

Die Montage erfolgt dabei erfindungsgemäß derart, dass von den drei stabförmigen Stabilisierungselementen 16 und dem Grundkörper 14 im montierten Zustand ein Tetraeder, also eine besonders stabile geometrische Form, aufgespannt wird. Dabei wird dasjenige Stabilisierungselement 16, welches mit der Unterseite des Grundkörpers 14 verbunden ist, derart mit einer Aufnahme 51 an der unteren Gehäusehälfte 12 verspannt, dass es- wie in Figur 5 gut erkennbar - einen Winkel von etwa 10° mit der Vertikal einschließt, und die beiden anderen, seitlich an dem Grundkörper 14 befestigten Stabilisierungselemente 16 werden derart befestigt, dass sie einen Winkel von gut 20° mit der Horizontalen einschließen.

Nachdem die Bearbeitungsvorrichtung 13 fertig montiert ist, kann eine Bearbeitung des Rotors in situ erfolgen. Zum Schutz von Personen, insbesondere des die Vorrichtung bedienenden Benutzers, wird dabei zunächst der Zugang zur Turbine mit einem mobilen Sicherheitszaun vorübergehend abgesperrt.

Für die Bearbeitung wird mittels der Laser-Messeinrichtung 34 ein zu bearbeitender Bereich, bei dem es sich vorliegend jeweils um eine Ringnut 7 in einer der Radscheiben 2 oder Mini-Discs 4 zur Aufnahme der Dichtbleche 5 handelt, erfasst und vermessen und das Bearbeitungswerkzeug 24 wird - in Position, also in Eingriff mit der Ringnut 7, gebracht. Dabei werden ausgehend von den angezeigten Werten des Messsystems auf einem separaten Bildschirm beliebige Parameter im CNC-Programm eingestellt. Anschließend wird der Rotor und somit die zu bearbeitende Radscheibe 2 bzw. Mini-Disc 4 mit Hilfe der vorhandenen Drehvorrichtung des Wellenstranges der Turbine oder einer separaten Drehvorrichtung rotiert und es wird Material abgetragen, konkret die Ringnut 7 tiefer gestochen und zwar um 1,5 mm. Wenn die ohnehin vorhandene Drehvorrichtung des Rotors zum Einsatz kommt, ist eine zusätzliche Arbeitsspindel nicht erforderlich.

Im Anschluss an die mechanische Nachbearbeitung einer ersten umlaufenden Ringnut 7 an einer Seite beispielsweise einer Radscheibe 2 kann - sofern vorhanden und erforderlich - eine zweite Ringnut 7, beispielsweise auf der anderen Seite der Radscheibe 2 in einer Mini-Disc 4 oder an einer anderen, beispielsweise gegenüberliegenden Radscheibe 2 bearbeitet werden, ohne dass eine Umpositionierung der gesamten Bearbeitungsvorrichtung 13 an der unteren Gehäusehälfte 12 erforderlich ist. Hierfür wird der Werkzeughalter 15 und somit der Stechdrehmeißel 24 aus der Werkzeugaufnahme 30 entfernt. Der Stechdrehmeißel 24 wird von dem Werkzeughalter 15 abgeschraubt und der Werkzeughalter 15 wird an der zweiten vorgegebenen Position an der Werkzeugaufnahme 30 positioniert, indem er auf den zweiten korrespondierend ausgebildeten Bereich an der gegenüberliegenden Seite der Werkzeugaufnahme 30 aufgesteckt wird. Der Stechdrehmeißel 24 wird derart wieder an dem Werkzeughalter 15 angeschraubt, dass seine Schneide erneut nach unten zeigt. In dieser Position wird eine weitere Ringnut 7 an der gleichen oder einer weiteren Radscheibe 2 oder einer Mini-Disc 4 bearbeitet.

Anschließend wird der Werkzeugträger 25 mittels der entsprechend orientierten Linearführung 26 in radialer Richtung von dem Rotor weggefahren und mit der axial orientierten Linearführung 26 in axialer Richtung zu einer benachbarten Radscheibe 2 oder Mini-Disc 4 gefahren, um eine dort vorhandene Ringnut7 zur Aufnahme von Dichtblechen 5 mit dem Stechdrehmeißel 24 nachzubearbeiten.

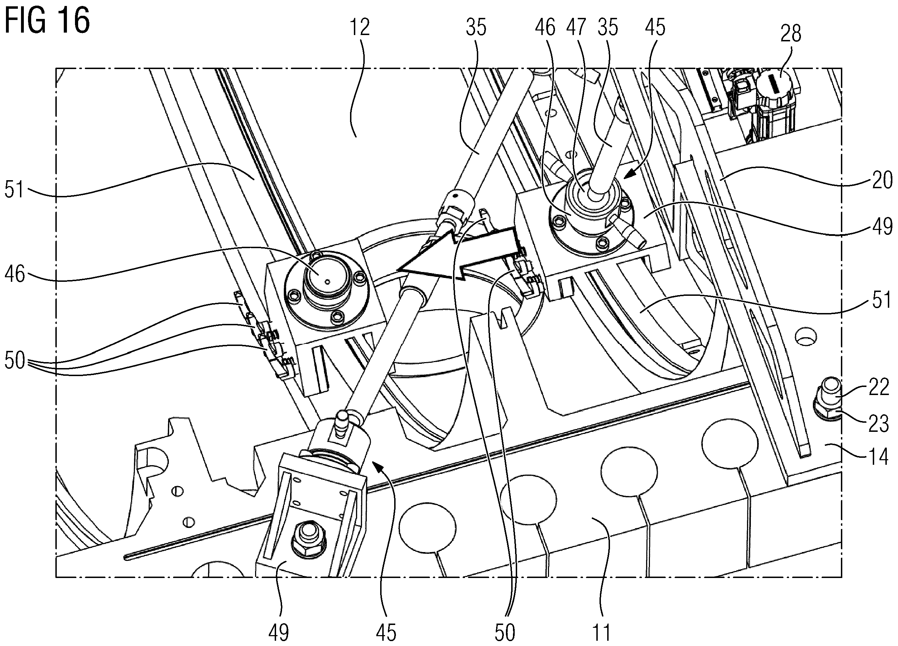

Sollen an der Turbine die umlaufenden Ringnuten 7 in weiteren, nicht benachbarten Radscheiben 2 oder Mini-Discs 4 auf die Weise mechanisch nachbearbeitet werden, ist die Befestigung der erfindungsgemäßen Bearbeitungsvorrichtung 13, konkret sowohl die des Grundkörpers 14 als auch die der drei Stabilisierungselemente 16 von der unteren Gehäusehälfte 12 zu lösen und an einer anderen axialen Position, die dann für die Bearbeitung der Ringnuten 7 der weiteren Radscheibe 2 und/oder Mini-Disc 4 geeignet ist, wieder lösbar zu befestigen. Der Positionswechsel des Fixierkörpers 49 des dritten Stabilisierungselementes 16, dessen eines freie Ende an der Unterseite des Grundkörpers 14 befestigt ist, von einer Position an der Aufnahme 51 für die Leitschaufelträger der Turbine zu einer anderen, axial versetzt liegenden Aufnahme 51, ist in der Figur 16 mit einem Pfeil angedeutet. Dabei kann derselbe Fixierkörper 49 zum Einsatz kommen oder es wird - insbesondere wenn die Befestigung an einer anders geformten Aufnahme 52 der unteren Gehäusehälfte 12 erforderlich ist - ein anders geformter Fixierkörper 49 verwendet. Für die Verspannung an einer Aufnahme 52 mit kleinerer oder größerer Ausdehnung in axialer Richtung kann beispielsweise ein U-förmiger Fixierkörper 49 mit geringerer oder größerer Breite herangezogen werden. In der Figur 16 ist dies angedeutet. Der weitere, in der Figur linke Fixierkörper 49 zeichnet sich durch eine geringere Breite aus, da er an einer dünneren Aufnahme 51 befestigt ist. Für eine besonders hohe Montageflexibilität kann eine Mehrzahl von Fixierkörper unterschiedlicher Form vorgehalten werden. Die Fixierkörper 49 können auch jeweils mit einer eigenen Gelenkkugelaufnahme 46 versehen sein, so dass ein Wechsel von einem auf einen anderen Fixierkörper 49, welcher in Figur 16 durch den Pfeil angedeutet ist, bequem erfolgen kann, indem der Kugelkopf 47 aus der einen Gelenkkugelaufnahme 46 entfernt und in die andere eingesetzt wird. Für einen bequemen Wechsel können die Gelenkkugelaufnahmen 46 auch einen oberen- und einen unteren Teil aufweisen, die lösbar miteinander verbunden sind, und ein anderer Fixierkörper 49, auf welchen der Wechsel zu erfolgen hat, kann nur mit einem eigenen Unterteil versehen sein.

Soll die erfindungsgemäße Vorrichtung 13 an einer Turbine mit anderen Dimensionen zum Einsatz kommen, können beispielsweise Stabilisierungselemente 16 verwendet werden, deren Streben 35 sich durch eine andere Länge auszeichnen.

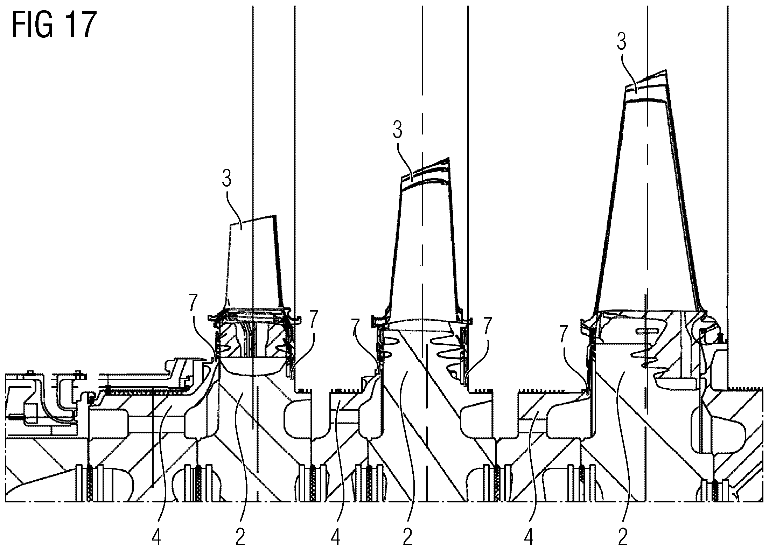

Auf die vorgenannte Weise können zum Beispiel fünf Ringnuten 7 an drei Radscheiben 2 und zwei Mini-Discs 4 mechanisch nachbearbeitet werden, wobei für die beiden Ringnuten 7 an einer Radscheibe 2 und benachbarten Mini-Disc 4 nur die Position des Stechdrehmeißels 24 an der Werkzeugaufnahme 30, für die Bearbeitung der Ringnuten 7 an einer benachbarten Radscheibe 2 nur die Position des Werkzeugträgers 25 verändert werden muss und ein Versetzen der gesamten Bearbeitungsvorrichtung 13 nur bei einem Übergang auf eine nicht benachbarte Radscheibe 2 bzw. Mini-Disc 4 erforderlich ist. In der Figur 17 sind fünf Ringnuten 7 der Turbine, die beispielsweise auf die erfindungsgemäße Weise nachbearbeitet werden, zu erkennen.

Im Anschluss an die Nachbearbeitung von beispielswiese fünf Ringnuten 7, die jeweils um etwa 1,5 mm tiefer gestochen wurden, wird in jede der Ringnuten 7 ein in seinen Abmessungen an diese angepasstes Dichtband 5 aus Metall umlaufend eingefädelt, wodurch eine zuverlässige Abdichtung erreicht und somit Kühlluftleckagen im Betrieb der Turbine vermieden oder zumindest erheblich reduziert werden. Ein in eine Ringnut 7 eingefädeltes Dichtband kann der Figur 3 entnommen werden.

Es versteht sich, dass die erfindungsgemäße Bearbeitungsvorrichtung 13 und das Verfahren zur Bearbeitung eines Rotors auch für andere Bearbeitungen als das vorstehend beispielhaft beschriebene Tieferstechen von Ringnuten 7 für die Aufnahme von Dichtblechen 5 zum Einsatz kommen können.

## Patentansprüche

1. Bearbeitungsvorrichtung (13) zur Bearbeitung eines in einem unter Bildung einer Teilfuge (11) zweigeteilten Turbinengehäuse angeordneten Rotors in situ bei abgenommener oberer Gehäusehälfte, umfassend
- einen Grundkörper (14), der Befestigungsmittel (21) zur lösbaren Befestigung des Grundkörpers (14) an der unteren Gehäusehälfte (12) im Bereich der Teilfuge (11) aufweist,
- zumindest einen Werkzeughalter (15) zur Aufnahme wenigstens eines Bearbeitungswerkzeugs (24), der relativ zu dem Grundkörper (14), bevorzugt entlang zumindest zweier Achsen ausrichtbar direkt oder indirekt an dem Grundkörper (14) befestigt ist,
**dadurch gekennzeichnet, dass** sie
- mehrere teleskopartig ausgebildete, bevorzugt stufenlos in verschiedene Längseinstellungen arretierbare Stabilisierungselemente (16), umfasst, deren eines freie Ende jeweils gelenkig an dem Grundkörper (14) befestigt ist und die an ihren anderen freien Enden mit weiteren Befestigungsmitteln (49) versehen sind, die derart ausgebildet sind, dass die freien Enden lösbar und gelenkig an der unteren Gehäusehälfte (12) des Turbinengehäuses befestigbar sind.

2. Vorrichtung (12) nach Anspruch 1,
**dadurch gekennzeichnet, dass**
die Stabilisierungselemente (16) stabförmig ausgebildet sind.

3. Vorrichtung (12) nach Anspruch 1 oder 2,
**dadurch gekennzeichnet, dass**
die Stabilisierungselemente (16) an einem Endbereich des Grundkörpers (14) gelenkig befestigt sind und die Befestigungsmittel (21) zur lösbaren Befestigung des Grundkörpers (14) an der unteren Gehäusehälfte (12) im Bereich der Teilfuge (11) an einem diesem Endbereich gegenüberliegenden Endbereich des Grundkörpers (14) vorgesehen sind.

4. Vorrichtung (13) nach einem der vorhergehenden Ansprüche, **dadurch gekennzeichnet, dass**
drei Stabilisierungselemente (16) vorgesehen sind und insbesondere eine freies Ende eines Stabilisierungselementes (16) an der Unterseite des Grundkörpers (14) gelenkig befestigt ist und von den beiden weiteren Stabilisierungselementen (16) jeweils ein freies Ende in Bezug auf die Unterseite seitlich an dem Grundkörper (14) gelenkig befestigt ist,
wobei die freien Enden der beiden weiteren Stabilisierungselemente (16) insbesondere an einander gegenüberliegenden Seiten des Grundkörpers (14) befestigt sind.

5. Vorrichtung (13) nach Anspruch 4,
**dadurch gekennzeichnet, dass**
die weiteren Befestigungsmittel (49) desjenigen Stabilisierungselementes (16), dessen freies Ende an der Unterseite des Grundkörpers (14) gelenkig befestigt ist, ausgebildet sind, um eine lösbare Befestigung an der unteren Gehäusehälfte (12) durch Verspannen zu ermöglichen, und/oder die weiteren Befestigungsmittel (49) derjenigen Stabilisierungselemente (16), deren freie Enden jeweils seitlich an dem Grundkörper (14) gelenkig befestigt sind, ausgebildet sind, um eine lösbare Befestigung an der unteren Gehäusehälfte (12) im Bereich der Teilfuge (11) durch Verschrauben zu ermöglichen.

6. Vorrichtung (13) nach einem der vorhergehenden Ansprüche, **dadurch gekennzeichnet, dass**
eine Laser-Messeinrichtung (34) vorgesehen ist, die insbesondere relativ zu dem Grundkörper (14), bevorzugt entlang zumindest zweier Achsen ausrichtbar direkt oder indirekt an dem Grundkörper (14) befestigt und/oder ausgebildet ist, um einen zu bearbeitenden Bereich, bevorzugt eine Nut (7), an dem Rotor zu erfassen und insbesondere zu vermessen.

7. Vorrichtung (13) nach einem der vorhergehenden Ansprüche, **dadurch gekennzeichnet, dass**
eine Auffang- und/oder Abtransport, insbesondere Absaugeinrichtung (53) für infolge der Bearbeitung auftretende Materialspäne vorgesehen ist, welche bevorzugt wenigstens einen Auffangbehälter (54) und/oder einen Staubsauger, besonders bevorzugt einen Industriestaubsauger umfasst.

8. Vorrichtung (13) nach einem der vorhergehenden Ansprüche, **dadurch gekennzeichnet, dass**
ein Werkzeugträger (25), der relativ zu dem Grundkörper (14), bevorzugt entlang zumindest zweier Achsen ausrichtbar direkt oder indirekt an dem Grundkörper (14) befestigt ist, vorgesehen ist, an welchem der Werkzeughalter (25) angeordnet ist.

9. Vorrichtung (13) nach Anspruch 6 und 8,
**dadurch gekennzeichnet, dass**
die Laser-Messeinrichtung (34) an dem Werkzeugträger (25) befestigt ist.

10. Vorrichtung (13) nach Anspruch 7 und 8,
**dadurch gekennzeichnet, dass**
der Auffangbehälter (54) der Auffang- und/oder Absaugeinrichtung (53) an dem Werkzeugträger (25) befestigt ist.

11. Vorrichtung (13) nach einem der vorhergehenden Ansprüche, **dadurch gekennzeichnet, dass**
sich der Grundkörper (14) durch eine Z-Form auszeichnet, mit zwei zumindest im Wesentlichen parallel zueinander orientierten plattenförmigen Abschnitten (17, 18), die zueinander versetzt angeordnet und über einen ebenfalls plattenförmigen Verbindungsabschnitt (19), der bevorzugt zumindest im Wesentlichen orthogonal zu den beiden plattenförmigen Abschnitten (17, 18) orientiert ist, miteinander verbunden sind, und insbesondere an dem Grundkörper (14) ober- und/oder unterseitig Verstärkungsstege (20) vorgesehen sind.

## Claims

1. Machining device (13) for machining in situ a rotor disposed in a turbine housing which, while forming a joint (11), is divided into two parts, said machining taking place while the upper housing half is removed, comprising:
- a main body (14) which has fastening means (21) for releasably fastening the main body (14) to the lower housing half (12) in the region of the joint (11),
- at least one tool holder (15) for receiving at least one machining tool (24), said at least one tool holder (15) being fastened directly or indirectly to the main body (14) and being able to be aligned, preferably along at least two axes, relative to the main body (14),
**characterized in that** said machining device (13)
- comprises a plurality of stabilizing elements (16) which, configured in the manner of a telescope, are able to be locked, preferably in a stepless manner, in different longitudinal settings, the one free end of said stabilizing elements (16) in each case being fastened in an articulated manner to the main body (14), and on the other free ends thereof being provided with further fastening means (49) which are configured in such a manner that the free ends are able to be fastened in a releasable and articulated manner to the lower housing half (12) of the turbine housing.

2. Device (13) according to Claim 1, **characterized in that** the stabilizing elements (16) are configured in the shape of rods.

3. Device (13) according to Claim 1 or 2, **characterized in that** the stabilizing elements (16) are fastened in an articulated manner to an end region of the main body (14), and the fastening means (21) for releasable fastening of the main body (14) to the lower housing half (12) in the region of the joint (11) are provided on an end region of the main body (14) that lies opposite said end region.

4. Device (13) according to one of the preceding claims, **characterized in that** three stabilizing elements (16) are provided, and in particular one free end of one stabilizing element (16) is fastened in an articulated manner to the lower side of the main body (14), and of the two further stabilizing elements (16) one free end, in terms of the lower side, is in each case fastened in an articulated manner laterally to the main body (14), wherein the free ends of the two further stabilizing elements (16) are in particular fastened to mutually opposite sides of the main body (14).

5. Device (13) according to Claim 4, **characterized in that** the further fastening means (49) of that stabilizing element (16) of which the free end is fastened in an articulated manner to the lower side of the main body (14) are configured so as to enable releasable fastening to the lower housing half (12) by bracing, and/or the further fastening means (49) of those stabilizing elements (16) of which the free ends are in each case fastened in an articulated manner laterally to the main body (14) are configured so as to enable releasable fastening to the lower housing half (12) in the region of the joint (11) by screw-fitting.

6. Device (13) according to one of the preceding claims, **characterized in that** a laser measuring installation (34) is provided, said laser measuring installation (34) being fastened directly or indirectly to the main body (14) and being able to be aligned, preferably along at least two axes, relative to the main body (14), and/or being configured for detecting and in particular measuring a region to be machined, preferably a groove (7), on the rotor.

7. Device (13) according to one of the preceding claims, **characterized in that** a collection and/or discharge installation, in particular suction installation (53) for material chips arising as a consequence of the machining is provided, said suction installation (53) preferably comprising at least one collection container (54) and/or a vacuum cleaner, particularly preferably an industrial vacuum cleaner.

8. Device (13) according to one of the preceding claims, **characterized in that** a tool carrier (25) is provided, said tool carrier (25) being fastened directly or indirectly to the main body (14) and being able to be aligned, preferably along at least two axes, relative to the main body (14), the tool holder (25) being disposed on said tool carrier (25).

9. Device (13) according to Claims 6 and 8, **characterized in that** the laser measuring installation (34) is fastened to the tool carrier (25).

10. Device (13) according to Claims 7 and 8, **characterized in that** the collection container (54) of the collection and/or suction installation (53) is fastened to the tool carrier (25) .

11. Device (13) according to one of the preceding claims, **characterized in that** the main body (14) is distinguished by a Z-shape, having two plate-shaped portions (17, 18) which are oriented so as to be at least substantially mutually parallel and disposed so as to be mutually offset and connected to each other by way of a likewise plate-shaped connecting portion (19) which is preferably oriented so as to be at least substantially orthogonal to the two plate-shaped portions (17, 18), and reinforcement webs (20) are provided in particular on the upper and/or the lower side on the main body (14).

## Revendications

1. Dispositif (13) d'usinage pour l'usinage in situ, alors que la moitié supérieure du carter est retirée, d'un rotor disposé dans un carter de turbine en deux parties avec formation d'un joint (11) de séparation, comprenant
- un corps (14) de base, qui a des moyens (21) de fixation pour la fixation amovible du corps (14) de base à la moitié (12) inférieure du carter dans la partie du joint (11) de séparation,
- au moins un porte-outil (15) pour la réception d'au moins un outil (24) d'usinage, qui, par rapport au corps (14) de base, est fixé directement ou indirectement au corps (14) de base en pouvant être orienté, de préférence suivant au moins deux axes,
**caractérisé en ce qu'**il
- comprend plusieurs éléments (16) de stabilisation de constitution télescopique, pouvant être arrêtés de préférence sans palier dans des positions longitudinales différentes,
dont respectivement une extrémité libre est articulée au corps (14) de base et qui sont pourvues, à leurs autres extrémités libres, d'autres moyens (49) de fixation constitués de manière à pouvoir fixer les extrémités libres, de manière amovible et articulée, à la moitié (12) inférieure du carter de la turbine.

2. Dispositif (12) suivant la revendication 1,
**caractérisé en ce que**
les éléments (16) de stabilisation sont constitués sous la forme de barre.

3. Dispositif (12) suivant la revendication 1 ou 2, **caractérisé en ce que**
les éléments (16) de stabilisation sont articulés à une partie d'extrémité du corps (14) de base et les moyens (21) de fixation sont prévus pour la fixation amovible du corps (14) de base à la moitié (12) inférieure du carter dans la partie du joint (11) de séparation sur une partie opposée à cette partie d'extrémité du corps (14) de base.

4. Dispositif (13) suivant l'une des revendications précédentes,
**caractérisé en ce qu'**il est prévu trois éléments (16) de stabilisation et notamment une extrémité libre d'un élément (16) de stabilisation est articulée au côté inférieur du corps (14) de base et par les deux autres éléments (16) de stabilisation respectivement une extrémité libre est articulée au corps (14) de base latéralement par rapport au côté inférieur,
dans lequel les extrémités libres des deux autres éléments (16) de stabilisation sont fixées notamment à des côtés opposés l'un à l'autre du corps (14) de base.

5. Dispositif (13) suivant la revendication 4,
**caractérisé en ce que**
les autres moyens (49) de fixation de l'élément (16) de stabilisation, dont l'extrémité libre est articulée au côté inférieur du corps (14) de base, sont constitués afin de permettre une fixation amovible à la moitié (12) inférieure du carter par blocage, et/ou les autres moyens (49) de fixation des éléments (16) de stabilisation, dont les extrémités libres sont articulées respectivement latéralement au corps (14) de base, sont constituées pour permettre une fixation amovible à la moitié (12) inférieure du carter dans la partie du joint (11) de séparation par vissage.

6. Dispositif (13) suivant l'une des revendications précédentes,
**caractérisé en ce qu'**
il est prévu un dispositif (34) de mesure laser, qui est fixé et/ou constitué directement ou indirectement sur le corps (14) de base avec possibilité d'être orienté, notamment par rapport au corps (14) de base, de préférence suivant au moins deux axes, afin de détecter et notamment de mesurer une partie à usiner, de préférence une rainure (7), du rotor.

7. Dispositif (13) suivant l'une des revendications précédentes,
**caractérisé en ce qu'**
il est prévu un transport de réception et/ou d'évacuation, notamment un dispositif (53) d'aspiration de copeaux de matériau se produisant en raison de l'usinage, qui comprend de préférence au moins un récipient (54) de réception et/ou un aspirateur de poussière, notamment de préférence un aspirateur de poussière industriel.

8. Dispositif (13) suivant l'une des revendications précédentes,
**caractérisé en ce qu'**
il est prévu un porte-outil (25), qui est fixé directement ou indirectement au corps (14) de base en pouvant être orienté par rapport au corps (14) de base, de préférence suivant au moins deux axes, sur lequel le porte-outil (25) est monté.

9. Dispositif (13) suivant la revendication 6 et 8, **caractérisé en ce que**
le dispositif (34) de mesure laser est fixé au porte-outil (25).

10. Dispositif (13) suivant la revendication 7 et 8, **caractérisé en ce que**
le récipient (54) de réception du dispositif (53) de réception et/ou d'aspiration est fixé au porte-outil (25).

11. Dispositif (13) suivant l'une des revendications précédentes,
**caractérisé en ce que**
le corps (14) de base se **caractérise par** une forme en Z, en ayant deux parties (17, 18) en forme de plaque orientées l'une par rapport à l'autre au moins d'une manière sensiblement parallèle, qui sont disposées de manière décalée l'une par rapport à l'autre et qui sont reliées l'une à l'autre par une partie (19) de liaison également en forme de plaque, qui est orientée, de préférence au moins sensiblement orthogonalement par rapport aux deux parties (17, 18) en forme de plaque et il est prévu des entretoises (20) de renfort du côté supérieur et/ou inférieur, notamment sur le corps (14) de base.
